# EUROPEAN PATENT APPLICATION

(11) **EP 4 697 831 A1**
(43) Date of publication of application: **18.02.2026**
(21) Application number: 24802601.5
(22) Date of filing: 13.03.2024
(51) Int. Cl.: H04W 72/0453

(54) **MODULATION AND CODING SCHEME INDICATION METHOD AND COMMUNICATION APPARATUS**

(30) Priority: 05.05.2023 CN 202310499512
(71) Applicant: Huawei Technologies Co., Ltd., Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN)
(74) Representative: Epping - Hermann - Fischer
(86) International application number: PCT/CN2024/081509
(87) International publication number: WO 2024/230313

(57) **Abstract**

Embodiments of this application provide a modulation and coding scheme indication method and a communication apparatus, and relate to the field of wireless communication technologies. In embodiments of this application, an unequal modulation and coding scheme MCS capability of a communication device can be flexibly indicated. The method includes: A first device determines an unequal MCS configuration. The first device sends indication information to a second device. The indication information indicates the unequal MCS configuration supported by the first device under a specified condition, and the specified condition includes at least one of the following: a bandwidth corresponding to the unequal MCS configuration, a size of a resource unit RU corresponding to the unequal MCS configuration, or a size of a multiple resource unit MRU corresponding to the unequal MCS configuration.

## Description

This application claims priority to Chinese Patent Application No. 202310499512.6, filed with the China National Intellectual Property Administration on May 5, 2023 and entitled "MODULATION AND CODING SCHEME INDICATION METHOD AND COMMUNICATION APPARATUS", which is incorporated herein by reference in its entirety.

### TECHNICAL FIELD

This application relates to the wireless communication field, and in particular, to a modulation and coding scheme indication method and a communication apparatus.

### BACKGROUND

In a wireless communication system, an unequal modulation and coding scheme (modulation and coding scheme, MCS) means that different MCSs may be used for resources allocated to a user in a specific dimension, for example, a spatial stream (spatial stream, SS) dimension or a tone dimension. In a communication process, a communication device needs to notify, in advance, another communication device of an unequal MCS capability supported by the communication device. However, the communication device cannot flexibly indicate the unequal MCS capability.

### SUMMARY

To resolve the foregoing technical problem, this application provides a modulation and coding scheme indication method and a communication apparatus, so that a communication device can flexibly indicate an unequal MCS capability. To achieve the foregoing objective, the following technical solutions are used in this application.

According to a first aspect, a modulation and coding scheme indication method is provided. The method may be performed by a first device, or may be performed by a chip used in the first device. The following provides descriptions by using an example in which the method is performed by the first device. The method includes:

The first device determines an unequal MCS configuration. The first device sends indication information to a second device, where the indication information indicates the unequal MCS configuration supported by the first device under a specified condition, and the specified condition includes at least one of the following:
condition 1: a bandwidth corresponding to the unequal MCS configuration;
condition 2: a size of a resource unit RU corresponding to the unequal MCS configuration; or
condition 3: a size of a multiple resource unit MRU corresponding to the unequal MCS configuration.

In other words, after determining the unequal MCS configuration, the first device sends the indication information to the second device, and indicates, to the second device based on the indication information, the unequal MCS configuration supported by the first device under the specified condition. The specified condition includes a plurality of cases such as the bandwidth, the size of the RU, or the size of the MRU that correspond to the unequal MCS configuration. Therefore, even if there may be a plurality of cases for the unequal MCS configuration supported by the first device, for example, the unequal MCS configuration supported by the first device in a specific bandwidth, the unequal MCS configuration supported by the first device for an RU of a specific size, or the unequal MCS configuration supported by the first device for an MRU of a specific size, the first device can also flexibly indicate unequal MCS capabilities under different specified conditions based on the indication information.

In a possible design, that the first device determines the unequal MCS configuration includes: determining the unequal MCS configuration based on a number of spatial streams NSS used by the first device.

For example, the first device determines the unequal MCS configuration based on an NSS used by the first device for sending, namely, an unequal MCS configuration used by the first device for sending, so that the first device uses the unequal MCS configuration in a data sending process. For another example, the first device determines the unequal MCS configuration based on an NSS used by the first device for receiving, namely, an unequal MCS configuration used by the first device for receiving, so that the first device uses the unequal MCS configuration in a data receiving process.

In a possible design, the unequal MCS configuration includes an unequal MCS configuration used by the first device for sending. In other words, the indication information can indicate an unequal MCS configuration used for data sending.

In a possible design, the unequal MCS configuration includes an unequal MCS configuration used by the first device for receiving. In other words, the indication information can indicate an unequal MCS configuration used for data receiving.

In a possible design, the unequal MCS configuration includes different MCSs corresponding to the first device in different spatial streams. In other words, the indication information can indicate an unequal MCS configuration in a spatial stream dimension.

In a possible design, the unequal MCS configuration includes different MCSs corresponding to the first device on different tones. In other words, the indication information can indicate an unequal MCS configuration in a tone dimension.

In a possible design, that the indication information indicates the unequal MCS configuration supported by the first device under the specified condition includes: The indication information indicates a first MCS, and the first MCS is an MCS with highest complexity supported by the first device.

In other words, the indication information indicates the unequal MCS configuration of the first device by indicating the MCS with the highest complexity supported by the first device. Because the first MCS is the MCS with the highest complexity in the unequal MCS configuration, complexity of an MCS other than the first MCS in the unequal MCS configuration is the same as or lower than the complexity of the first MCS, so that the second device learns of the unequal MCS configuration based on the first MCS indicated by the indication information.

In a possible design, the first MCS is an MCS used in a first spatial stream. The indication information further indicates a second MCS, and the second MCS is an MCS used in a second spatial stream.

In other words, the indication information can implement indication at a finer granularity, to help the second device learn of the unequal MCS configuration more accurately.

In a possible design, that the indication information indicates the unequal MCS configuration supported by the first device under the specified condition includes: The indication information includes a number of spatial streams NSS and an unequal MCS configuration corresponding to the NSS.

Because the indication information includes the NSS and the unequal MCS configuration corresponding to the NSS, the first device indicates the unequal MCS configuration of the first device in a process of indicating, based on the indication information, a maximum NSS used by the first device.

In a possible design, after sending the indication information to the second device, the method further includes: The first device sends or receives data in different spatial streams by using the unequal MCS configuration, so that the first device communicates with another device by using the unequal MCS configuration.

In a possible design, after sending the indication information to the second device, the method further includes: The first device sends or receives data on different tones by using the unequal MCS configuration, so that the first device communicates with another device by using the unequal MCS configuration.

According to a second aspect, a modulation and coding scheme indication method is provided. The method may be performed by a first device, or may be performed by a chip used in the first device. The following provides descriptions by using an example in which the method is performed by the first device. The method includes:
The first device determines an unequal modulation and coding scheme MCS configuration. The first device sends indication information to a second device, where the indication information indicates an MCS index, and the MCS index is an index of the unequal MCS configuration.

In other words, after determining the unequal MCS configuration, the first device sends the indication information to the second device, and indicates the MCS index to the second device based on the indication information. The MCS index indicated by the indication information is the index of the unequal MCS configuration. Therefore, even if there may be a plurality of cases for the unequal MCS configuration supported by the first device, the first device can also flexibly indicate an unequal MCS capability of the first device based on the indication information.

In a possible design, the determining the unequal MCS configuration includes: determining the unequal MCS configuration based on a number of spatial streams NSS used by the first device. In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device on different tones.

In a possible design, the MCS index is associated with a resource configuration, the resource configuration includes a resource unit RU or a multiple resource unit MRU allocated to the first device, and the RU and the MRU include a plurality of tones. The MCS index indicates different MCSs corresponding to different tones in the resource configuration.

In other words, although the MCS index does not indicate the resource configuration, the MCS index is associated with the resource configuration, so that the MCS index can indicate different MCSs corresponding to different tones in the resource configuration.

In this way, when the MCS index is associated with different resource configurations, different MCSs corresponding to tones in different resource configurations can be indicated, to flexibly indicate the unequal MCS configuration.

In a possible design, the MCS index indicates a resource configuration and different MCSs corresponding to different tones in the resource configuration. The resource configuration includes a resource unit RU or a multiple resource unit MRU allocated to the first device, and the RU and the MRU include a plurality of tones.

In other words, the MCS index indicates the resource configuration, and indicates different MCSs corresponding to different tones in the resource configuration.

In this way, the MCS index varies with the resource configuration, to flexibly indicate the unequal MCS configuration.

In a possible design, the unequal MCS configuration includes different MCSs corresponding to the first device in different spatial streams.

In a possible design, the MCS index is associated with a number of spatial streams NSS, and the MCS index indicates different MCSs corresponding to different spatial streams in the NSS.

In other words, although the MCS index does not indicate the NSS, the MCS index is associated with the NSS, so that the MCS index can indicate different MCSs corresponding to different spatial streams in the NSS.

In this way, when the MCS index is associated with different NSSs, different MCSs corresponding to spatial streams in different NSSs can be indicated, to flexibly indicate the unequal MCS configuration.

In a possible design, the MCS index indicates an NSS and different MCSs corresponding to different spatial streams in the NSS.

In other words, the MCS index indicates the NSS, and indicates different MCSs corresponding to different spatial streams in the NSS.

In this way, the MCS index varies with the NSS, to flexibly indicate the unequal MCS configuration.

In a possible design, that the indication information indicates the MCS index includes: The indication information includes a bitmap, and the bitmap indicates the MCS index. In other words, the first device indicates the MCS index based on a bitmap.

In a possible design, that the indication information indicates the MCS index includes: The indication information includes an MCS index value, and the MCS index value indicates the MCS index. In other words, the first device indicates the MCS index by sending the index value.

In a possible design, that the indication information indicates the MCS index includes: The indication information indicates a start position and/or an end position of the MCS index. In other words, the first device indicates the MCS index by indicating an MCS index range.

In a possible design, after sending the indication information to the second device, the method further includes: The first device sends or receives data in different spatial streams by using the unequal MCS configuration.

In a possible design, after sending the indication information to the second device, the method further includes: The first device sends or receives data on different tones by using the unequal MCS configuration.

According to a third aspect, a modulation and coding scheme indication method is provided. The method may be performed by a second device, or may be performed by a chip used in the second device. The following provides descriptions by using an example in which the method is performed by the second device. The method includes:

The second device receives indication information from a first device, where the indication information indicates an unequal MCS configuration supported by the first device under a specified condition, and the specified condition includes at least one of the following:
a bandwidth corresponding to the unequal MCS configuration;
a size of a resource unit RU corresponding to the unequal MCS configuration; or
a size of a multiple resource unit MRU corresponding to the unequal MCS configuration.

The second device determines the unequal MCS configuration based on the indication information. In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device in different spatial streams; or different MCSs corresponding to the first device on different tones.

In a possible design, that the indication information indicates the unequal MCS configuration supported by the first device under the specified condition includes: The indication information indicates a first MCS, and the first MCS is an MCS with highest complexity supported by the first device.

In a possible design, the first MCS is an MCS used in a first spatial stream; and the indication information further indicates a second MCS, and the second MCS is an MCS used in a second spatial stream.

In a possible design, that the indication information indicates the unequal MCS configuration supported by the first device under the specified condition includes: The indication information includes a number of spatial streams NSS and an unequal MCS configuration corresponding to the NSS.

According to a fourth aspect, a modulation and coding scheme indication method is provided. The method may be performed by a second device, or may be performed by a chip used in the second device. The following provides descriptions by using an example in which the method is performed by the second device. The method includes:
The second device receives indication information from a first device, where the indication information indicates a modulation and coding scheme MCS index, and the MCS index is an index of an unequal MCS configuration.

The second device determines the unequal MCS configuration based on the MCS index.

In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device on different tones.

In a possible design, the MCS index is associated with a resource configuration, the resource configuration includes a resource unit RU or a multiple resource unit MRU allocated to the first device, and the RU and the MRU include a plurality of tones. The MCS index indicates different MCSs corresponding to different tones in the resource configuration.

In a possible design, the MCS index indicates a resource configuration and different MCSs corresponding to different tones in the resource configuration. The resource configuration includes a resource unit RU or a multiple resource unit MRU allocated to the first device, and the RU and the MRU include a plurality of tones.

In a possible design, the unequal MCS configuration includes different MCSs corresponding to the first device in different spatial streams.

In a possible design, the MCS index is associated with a number of spatial streams NSS, and the MCS index indicates different MCSs corresponding to different spatial streams in the NSS.

In a possible design, the MCS index indicates an NSS and different MCSs corresponding to different spatial streams in the NSS.

In a possible design, that the indication information indicates the MCS index includes: The indication information includes a bitmap, and the bitmap indicates the MCS index.

In a possible design, that the indication information indicates the MCS index includes: The indication information includes an MCS index value, and the MCS index value indicates the MCS index.

In a possible design, that the indication information indicates the MCS index includes: The indication information indicates a start position and/or an end position of the MCS index.

According to a fifth aspect, a device is provided. The device includes a processor and a memory. The processor is coupled to the memory, the memory stores program instructions, and when the program instructions stored in the memory are executed by the processor, the device is enabled to perform the method according to the first aspect or any possible design of the first aspect, or the device is enabled to perform the method according to the second aspect or any possible design of the second aspect.

According to a sixth aspect, a device is provided. The device includes a processor and a memory. The processor is coupled to the memory, the memory stores program instructions, and when the program instructions stored in the memory are executed by the processor, the device is enabled to perform the method according to the third aspect or any possible design of the third aspect, or the device is enabled to perform the method according to the fourth aspect or any possible design of the fourth aspect.

According to a seventh aspect, a chip is provided. The chip includes a processor and a memory coupled to the processor, the memory stores a computer program, the chip is located in a device, and when the processor executes the computer program, the device is enabled to perform the method according to the first aspect or any possible design of the first aspect, or the device is enabled to perform the method according to the second aspect or any possible design of the second aspect.

According to an eighth aspect, a chip is provided. The chip includes a processor and a memory coupled to the processor, the memory stores a computer program, the chip is located in a device, and when the processor executes the computer program, the device is enabled to perform the method according to the third aspect or any possible design of the third aspect, or the device is enabled to perform the method according to the fourth aspect or any possible design of the fourth aspect.

According to a ninth aspect, a computer-readable storage medium is provided. The computer-readable storage medium stores a computer program or instructions, and when the computer program or the instructions are executed on a device, the device is enabled to perform the method according to the first aspect or any possible design of the first aspect, or the device is enabled to perform the method according to the second aspect or any possible design of the second aspect. According to a tenth aspect, a computer-readable storage medium is provided. The computer-readable storage medium stores a computer program or instructions, and when the computer program or the instructions are executed on a device, the device is enabled to perform the method according to the third aspect or any possible design of the third aspect, or the device is enabled to perform the method according to the fourth aspect or any possible design of the fourth aspect. According to an eleventh aspect, a computer program product including instructions is provided. When the computer program product runs on a computer, the computer is enabled to perform the method according to any one of the foregoing aspects.

According to a twelfth aspect, a circuit system is provided. The circuit system includes a processing circuit configured to perform the method according to any one of the foregoing aspects. According to a thirteenth aspect, a communication system is provided, including a first device and a second device.

The first device is configured to perform the method according to the first aspect and any possible design of the first aspect, and the second device is configured to perform the method according to the third aspect and any possible design of the third aspect.

Alternatively, the first device is configured to perform the method according to the second aspect and any possible design of the second aspect, and the second device is configured to perform the method according to the fourth aspect and any possible design of the fourth aspect.

For technical effect of any design of the third aspect to the thirteenth aspect, refer to the beneficial effect in the corresponding methods provided above. Details are not described herein again.

### BRIEF DESCRIPTION OF DRAWINGS

FIG. 1 is a diagram of an architecture of a communication system according to an embodiment of this application;
FIG. 2 is a diagram of a structure of a communication apparatus according to an embodiment of this application;
FIG. 3 is a diagram of a structure of another communication apparatus according to an embodiment of this application;
FIG. 4 is a diagram of resource distribution according to an embodiment of this application;
FIG. 5 is another diagram of resource distribution according to an embodiment of this application;
FIG. 6 is still another diagram of resource distribution according to an embodiment of this application;
FIG. 7 is a schematic flowchart of a modulation and coding scheme indication method according to an embodiment of this application;
FIG. 8 is a diagram of distribution of modulation and coding schemes in different spatial streams according to an embodiment of this application;
FIG. 9 is a diagram of a field format of indication information according to an embodiment of this application;
FIG. 10 is a diagram of a subfield format of indication information according to an embodiment of this application;
FIG. 11 is another diagram of distribution of modulation and coding schemes in different spatial streams according to an embodiment of this application;
FIG. 12 is a diagram of another subfield format of indication information according to an embodiment of this application;
FIG. 13 is a diagram of still another subfield format of indication information according to an embodiment of this application;
FIG. 14 is a schematic flowchart of another modulation and coding scheme indication method according to an embodiment of this application;
FIG. 15 is a schematic flowchart of still another modulation and coding scheme indication method according to an embodiment of this application;
FIG. 16 is a schematic flowchart of yet another modulation and coding scheme indication method according to an embodiment of this application; and
FIG. 17 is a diagram of a structure of still another communication apparatus according to an embodiment of this application.

### DESCRIPTION OF EMBODIMENTS

The following describes technical solutions of this application with reference to accompanying drawings.

Embodiments of this application may be applicable to a wireless local area network (wireless local area network, WLAN) scenario, and may be applicable to the 802.11 system standard, for example, the 802.11be standard or a next-generation standard of 802.11be. The 802.11be standard is referred to as an extremely high throughput (extremely high throughput, EHT) standard.

Alternatively, embodiments of this application may be applicable to a wireless local area network system, for example, an internet of things (internet of things, IoT) or vehicle-to-X (vehicle-to-X, V2X) network. Certainly, embodiments of this application may be further applicable to another possible communication system, for example, a 5th generation (5th generation, 5G) communication system or a subsequently evolved communication system.

The foregoing communication systems applicable to this application are merely examples for description, and communication systems applicable to this application are not limited thereto. This is uniformly described herein. Details are not described below again.

This application provides a WLAN communication system applicable to embodiments of this application. The WLAN communication system includes a first device and a second device. Optionally, both the first device and the second device may be access points (access point, AP); or one of the first device and the second device may be an AP, and the other is a station (station, STA); or both the first device and the second device may be STAs.

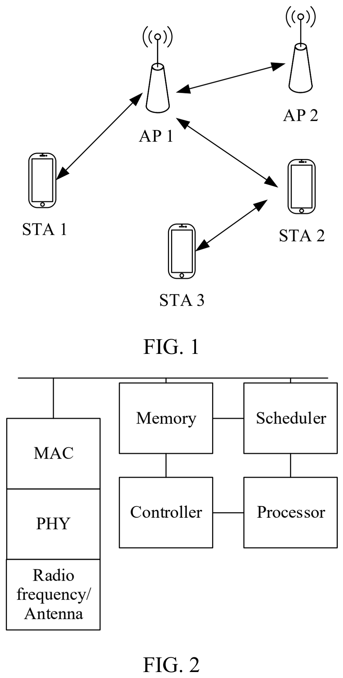

In an example, FIG. 1 is a diagram of an architecture of a WLAN communication system according to this application. In FIG. 1, an example in which the WLAN communication system includes an AP 1, an AP 2, a STA 1, a STA 2, and a STA 3 is used. It should be understood that numbers of APs and STAs in FIG. 1 are merely an example. There may be more or fewer APs and STAs. For example, in the communication system shown in FIG. 1, the AP 1 may be a first device, and the STA 1 may be a second device; or the AP 1 may be a first device, and the AP 2 is a second device; or one of the STA 2 and the STA 3 is a first device, and the other is a second device. It should be understood that the AP and the STA in FIG. 1 may alternatively serve as the first device and the second device in another combination. This is not limited.

The STA in embodiments of this application may be a wireless communication chip, a wireless sensor, or a wireless communication terminal, for example, a user terminal, a user apparatus, an access apparatus, a subscriber station, a subscriber unit, a mobile station, a user agent, or user equipment that supports a wireless fidelity (wireless fidelity, Wi-Fi) communication function. The user terminal may include various handheld devices having a wireless communication function, for example, a vehicle-mounted device, a wearable device, an internet of things (internet of things, IoT) device, a computing device, another processing device connected to a wireless modem, user equipment (user equipment, UE) in various forms, a mobile station (mobile non-AP Station, MS), a terminal (terminal), a terminal device (terminal equipment), a portable communication device, a handheld device, a portable computing device, an entertainment device, a game device or system, a global positioning system device, or any other suitable device configured to perform network communication via a wireless medium. In addition, the STA may support a plurality of WLAN standards such as 802.11be or a next-generation standard of 802.11be, 802.11ax, 802.11ac, 802.11n, 802.11g, 802.11b, and 802.11a.

The AP in embodiments of this application may be an apparatus that is deployed in a wireless communication network to provide a wireless communication function for a STA associated with the AP. The AP is mainly deployed at home, inside a building, and in a campus, with a typical coverage radius of tens of meters to hundreds of meters. Certainly, the AP may alternatively be deployed outdoors. The AP is equivalent to a bridge that connects a wired network and a wireless network. A main function of the AP is to connect various wireless network clients together and then connect the wireless network to the Ethernet. Specifically, the AP may be a communication device with a Wi-Fi chip, for example, a base station, a router, a gateway, a repeater, a communication server, a switch, or a bridge. The base station may include a macro base station, a micro base station, a relay station, and the like in various forms. In addition, the AP may support WLAN standards such as 802.11be or a next-generation standard of 802.11be, 802.11ax, 802.11ac, 802.11n, 802.11g, 802.11b, and 802.11a.

It may be understood that the AP and the STA in this application may be collectively referred to as WLAN devices.

In some examples, as shown in FIG. 2, each of the WLAN devices may use a composition structure shown in FIG. 2, or include components shown in FIG. 2. FIG. 2 is a diagram of composition of a communication apparatus according to an embodiment of this application. The communication apparatus may be an AP, a chip in an AP, or a system-on-a-chip; or the communication apparatus may be a STA, a chip in a STA, or a system-on-a-chip. As shown in FIG. 2, the communication apparatus includes a memory, a scheduler, a controller, and a processor, and may further include a media access control (media access control, MAC) layer, a physical (physical, PHY) layer, and a radio frequency/antenna.

The memory may be configured to store signaling information, a preset value agreed on in advance, or the like. The processor may be configured to parse the signaling information and process related data. The radio frequency/antenna may be configured to send and/or receive the signaling information. In addition, the communication apparatus may further include a preempted queue and a fast queue, and an interface may exist between the preempted queue and the fast queue for mutual communication.

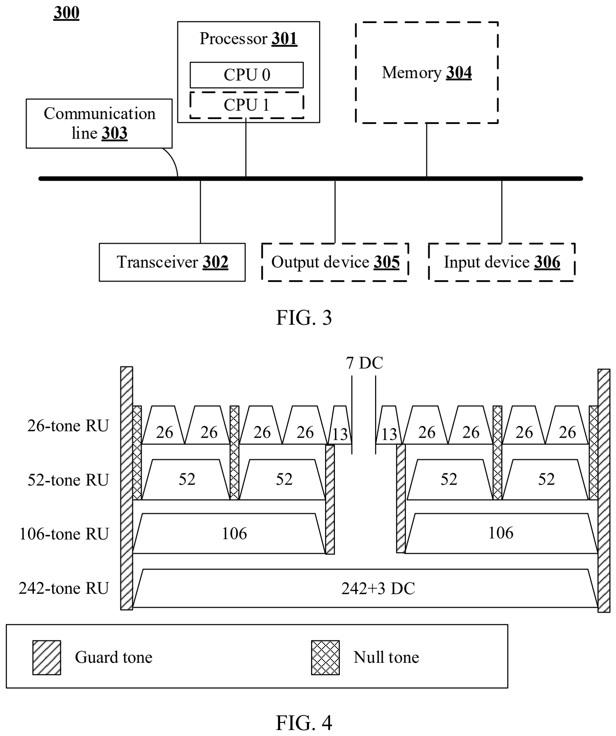

In some other examples, as shown in FIG. 3, each of the WLAN devices may use a composition structure shown in FIG. 3, or include components shown in FIG. 3. FIG. 3 is a diagram of composition of a communication apparatus according to an embodiment of this application. The communication apparatus may be an AP, a chip in an AP, or a system-on-a-chip; or the communication apparatus may be a STA, a chip in a STA, or a system-on-a-chip.

As shown in FIG. 3, the WLAN device 300 includes a processor 301 and a transceiver 302. Further, the WLAN device 300 may include a memory 304. The processor 301, the memory 304, and the transceiver 302 may be connected through a communication line 303.

Optionally, the processor 301 may be a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

In an example, the processor 301 may include one or more CPUs, for example, a CPU 0 and a CPU 1 in FIG. 3. The WLAN device 300 may include a plurality of processors. For example, in addition to the processor 301 in FIG. 3, the WLAN device 300 may further include another processor (not shown in FIG. 3).

The transceiver 302 is configured to communicate with another device or another communication network. The another communication network may be the Ethernet, a radio access network (radio access network, RAN), a WLAN, or the like. The transceiver 302 may be a module, a circuit, a transceiver, or any apparatus that can implement communication.

The communication line 303 is configured to transmit information between components included in the WLAN device 300.

The memory 304 is configured to store instructions. The instructions may be a computer program. The memory 304 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storages (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 304 may exist independently of the processor 301, or may be integrated with the processor 301. The memory 304 may be configured to store the instructions, program code, some data, or the like. The memory 304 may be located inside the WLAN device 300, or may be located outside the WLAN device 300. This is not limited. The processor 301 may execute the instructions stored in the memory 304, to perform a method provided in the following embodiment of this application.

In an optional implementation, the WLAN device 300 further includes an output device 305 and an input device 306. For example, the input device 306 is a device like a keyboard, a mouse, a microphone, or a joystick, and the output device 305 is a device like a display or a speaker (speaker).

It should be understood that the composition structure shown in FIG. 3 does not constitute a limitation on the WLAN device. In addition to the components shown in FIG. 3, the WLAN device may include more or fewer components than those shown in the figure, a combination of some components, or a different component layout.

For ease of understanding embodiments of this application, the following first briefly describes terms in embodiments of this application. It should be understood that these descriptions are merely intended to facilitate understanding of embodiments of this application, and shall not constitute any limitation on this application.

### 1. Resource unit (resource unit, RU) and multiple resource unit (multi-RU, MRU)

The RU and the MRU are described by using a tone plan (Tone Plan) defined in the 802.11be standard as an example.

### 1-1. RU

In terms of user frequency band resource allocation, a frequency band resource is allocated to a user in a unit of the RU. A 20 MHz channel may include a plurality of RUs in a form of a 26-tone RU, a 52-tone RU, and a 106-tone RU. Herein, tone indicates a subcarrier. For example, the 26-tone RU indicates an RU including 26 tones, and the 26-tone RU may be allocated to one user for use. In addition, the RU may alternatively be allocated to one or more users in a form of 242-tone, 484-tone, 996-tone, or the like.

When a bandwidth (bandwidth, BW) is 20 MHz, as shown in FIG. 4, the entire bandwidth may include an entire 242-tone RU or various combinations of a 26-tone RU, a 52-tone RU, and a 106-tone RU. In addition to the RU used for data transmission, some guard (Guard) tones, null tones, or direct current (direct current, DC) tones are further included.

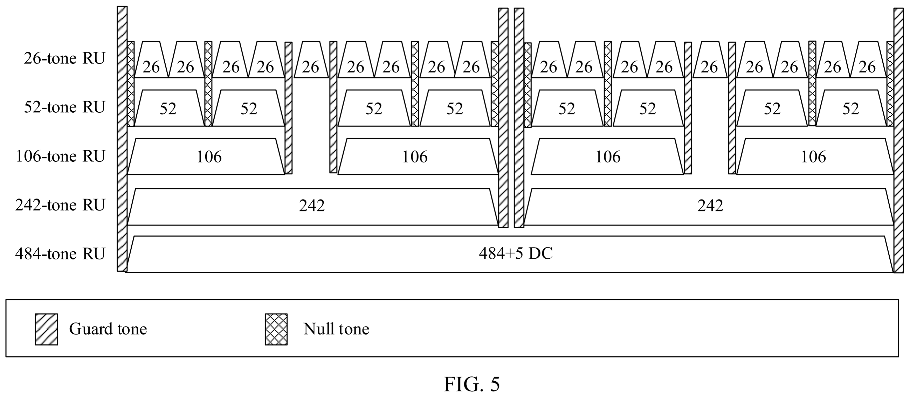

When a bandwidth is 40 MHz, as shown in FIG. 5, the entire bandwidth is approximately equivalent to duplication of a 20 MHz tone plan, and may include an entire 484-tone RU or various combinations of a 26-tone RU, a 52-tone RU, a 106-tone RU, and a 242-tone RU.

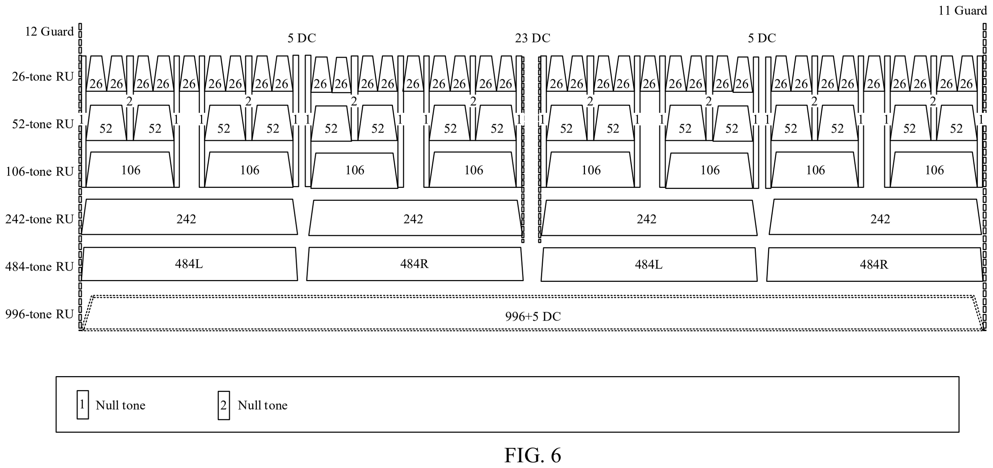

When a bandwidth is 80 MHz, as shown in FIG. 6, the entire bandwidth may include four resource units in a unit of a 242-tone RU. The entire bandwidth may include an entire 996-tone RU, or may include various combinations of a 26-tone RU, a 52-tone RU, a 106-tone RU, a 242-tone RU, and a 484-tone RU. 484L indicates a left half part of the 484-tone RU, and 484R indicates a right half part of the 484-tone RU. 484L and 484R each include 242 tones, which is another diagram of 484+5 DC.

When a bandwidth is 160 MHz, the entire bandwidth may be considered as duplication of a tone plan of two 80 MHz channels, and the entire bandwidth may include an entire 2*996-tone RU, or may include various combinations of a 26-tone RU, a 52-tone RU, a 106-tone RU, a 242-tone RU, a 484-tone RU, and a 996-tone RU. When a bandwidth is 240 MHz or 160+80 MHz, the entire bandwidth may be considered as duplication of a tone plan of three 80 MHz channels. When a bandwidth is 320 MHz, the entire bandwidth may be considered as duplication of a tone plan of four 80 MHz channels. This is not shown in FIG. 4 to FIG. 6.

The foregoing various tone plans are in a unit of the 242-tone RU. A left side of each figure (for example, FIG. 4, FIG. 5, or FIG. 6) may be considered as a lowest frequency, and a right side of each figure may be considered as a highest frequency. From left to right, the 242-tone RU can be numbered as 1^{st}, 2^{nd}, ..., and 16^{th}. It should be noted that in a data field, a maximum of 16 242-tone RUs one-to-one correspond to 16 20 MHz channels in ascending order of frequencies.

### 1-2. MRU

In addition to the several RUs mentioned above, the 802.11be standard further introduces combinations such as a 52+26-tone RU including a 52-tone RU and a 26-tone RU, a 106+26-tone RU including a 106-tone RU and a 26-tone RU, a 484+242-tone RU including a 484-tone RU and a 242-tone RU, a 996+484-tone RU including a 996-tone RU and a 484-tone RU, a 2*996+484-tone RU including two 996-tone RUs and a 484-tone RU, a 3*996-tone RU including three 996-tone RUs, and a 3*996+484-tone RU including three 996-tone RUs and a 484-tone RU. These RU combinations may also be referred to as MRUs.

In terms of bandwidth, a 26-tone RU corresponds to approximately 2 MHz, a 52-tone RU corresponds to approximately 4 MHz, a 106-tone RU corresponds to approximately 8 MHz, and a 242-tone RU corresponds to approximately 20 MHz. A size of another RU may be deduced by analogy. Details are not described herein.

### 2. Modulation and coding scheme (modulation and coding scheme, MCS) and complexity of the MCS

### 2-1. MCS

To meet communication quality of different terminal devices in a system, the communication system supports a plurality of MCSs. Each MCS includes a modulation order and a code rate, and different MCSs are not completely the same. The code rate is usually indicated by a decimal or a fraction greater than 0 and less than 1, for example, 1/2 or 2/3.

At a specific code rate, a higher modulation order indicates higher spectral efficiency of the system. The modulation scheme may be classified into quadrature phase shift keying (quadrature phase shift keying, QPSK) modulation and quadrature amplitude modulation (quadrature amplitude modulation, QAM) from a technical perspective. Further, QAM modulation may be classified into 16-QAM, 64-QAM, 256-QAM, and the like based on different modulation orders.

When channel quality between a network device and a terminal device is good, the network device usually sends a downlink signal to the terminal device by using a high-order modulation scheme, for example, 64-QAM or 256-QAM; or the terminal device sends an uplink signal to the network device by using a high-order modulation scheme, to obtain higher spectral efficiency. When channel quality between the network device and the terminal device is poor, the network device usually sends a downlink signal to the terminal device by using a low-order modulation scheme, for example, 16-QAM or QPSK; or the terminal device sends an uplink signal to the network device by using a low-order modulation scheme, to improve communication reliability.

Under a specific modulation order, a lower code rate indicates more redundant bits added during encoding, higher communication reliability, but lower spectral efficiency.

When channel quality between the network device and the terminal device is good, the network device usually sends a downlink signal at a high code rate; or the terminal device sends an uplink signal to the network device at a high code rate, to maintain high spectral efficiency. When channel quality between the network device and the terminal device is poor, the network device usually sends a downlink signal to the terminal device at a low code rate; or the terminal device sends an uplink signal to the network device at a low code rate, to improve communication reliability. When the network device communicates with the terminal device, the network device may indicate different MCS index values based on different status values of one indication field, and each MCS index value corresponds to one or more MSCs. In other words, the network device may send indication information to the terminal device, and the indication information may be an MCS index. It should be understood that, in embodiments of this application, definitions indicated by "index", "index value", "number", and "identifier" are the same, and may be replaced with each other. This is uniformly described herein. Details are not described below again.

### 2-2. Complexity of the MCS

The complexity of the MCS is reflected in complexity of processing the MCS by a communication device, and may be reflected in the modulation scheme and/or the code rate.

Usually, a larger number of bits corresponding to one tone indicates higher complexity of the MCS. For example, an example of complexity in descending order is as follows: 16-QAM (one tone corresponds to 4 bits)>QAM (one tone corresponds to 2 bits)>BPSK (one tone corresponds to 1 bit).

In addition, the code rate also relates to the complexity. In a possible implementation, for a same modulation scheme, it may be considered that tones with different code rates have same or different complexity (for example, it is considered that a higher code rate indicates higher complexity of the MCS, or a lower code rate indicates higher complexity of the MCS).

The following uses Table 1 as an example for description.

**Table 1**

| MCS index (MCS index) value | Modulation (Modulation) scheme | Code rate |
|---|---|---|
| 0 | BPSK | 1/2 |
| 1 | QPSK | 1/2 |
| 2 | | 3/4 |
| 3 | 16-QAM | 1/2 |
| 4 | | 3/4 |
| 5 | 64-QAM | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |

In Table 1, the modulation schemes corresponding to the MCS index value 3 and the MCS index value 4 are 16-QAM. The modulation schemes corresponding to the MCS index value 1 and the MCS index value 2 are QPSK. The modulation scheme corresponding to the MCS index value 0 is BPSK.

For different modulation schemes, complexity of the MCS corresponding to the MCS index value 3 (or the MCS index value 4) is higher than complexity of the MCS corresponding to the MCS index value 1 and the MCS index value 2. The complexity of the MCS corresponding to the MCS index value 1 (or the MCS index value 2) is higher than complexity of the MCS corresponding to the MCS index value 0.

Further, for a same modulation scheme, the code rate corresponding to the MCS index value 3 is 1/2, and the code rate corresponding to the MCS index value 4 is 3/4.

For example, a higher code rate indicates higher complexity of an MCS. The complexity of the MCS corresponding to the MCS index value 4 is higher than the complexity of the MCS corresponding to the MCS index value 3.

For another example, a higher code rate indicates lower complexity of an MCS. The complexity of the MCS corresponding to the MCS index value 4 is lower than the complexity of the MCS corresponding to the MCS index value 3.

In addition, for an MCS on which an operation like tone duplication is performed, for example, a dual-carrier modulation (dual-carrier modulation, DCM) mode and a duplication (duplication, DUP) transmission mode, complexity is not fixed, and the complexity may alternatively be sorted in a specific order. This is not limited in embodiments of this application.

It may be understood that complexity of any two MCSs may be the same or may be different. In other words, one piece of complexity may correspond to two or more MCSs.

Alternatively, for a same modulation scheme, for example, complexity of an MCS is determined based on a modulation scheme. The modulation schemes corresponding to the MCS index value 3 and the MCS index value 4 are 16-QAM. Correspondingly, the complexity of the MCS corresponding to the MCS index value 3 is the same as the complexity of the MCS corresponding to the MCS index value 4.

The modulation schemes corresponding to the MCS index value 5, the MCS index value 6, and the MCS index value 7 are 64-QAM. Correspondingly, the MCS corresponding to the three indices (for example, the MCS index value 5, the MCS index value 6, and the MCS index value 7) have the same complexity.

It may be understood that one piece of complexity may correspond to a plurality of MCSs. Definitions of the complexity, the complexity of the MCS, and a complexity level of the MCS are the same, and may be replaced with each other. The complexity level of the MCS may be denoted as an MCS level. It may be understood that one MCS level may correspond to a plurality of MCSs. In a possible implementation, an MCS index is related to complexity of an MCS corresponding to the index.

For example, MCSs are sorted in ascending order, and a smaller MCS index value indicates lower complexity of an MCS corresponding to the MCS index.

For another example, MCSs are sorted in descending order, and a smaller MCS index value indicates higher complexity of an MCS corresponding to the MCS index.

### 3. Unequal MCS

The unequal MCS means that in an orthogonal frequency division multiplexing (orthogonal frequency division multiplexing, OFDM) communication system, different MCSs, for example, binary phase shift keying (binary phase shift keying, BPSK), quaternary phase shift keying (quaternary phase shift keying, QPSK), and 16 quadrature amplitude modulation (16 quadrature amplitude modulation, 16-QAM) and different code rates may be used for resources allocated to a user A in a dimension, for example, a spatial stream (spatial stream, SS) dimension or a tone dimension. The following provides descriptions with reference to two examples.

### Example 1: Unequal MCS in the spatial stream dimension:

It may be understood that different spatial streams correspond to different MCSs.

For example, a 996-tone RU is allocated to the user A, and the user A uses four spatial streams for transmission on the 996-tone RU. A modulation scheme used by a first spatial stream in the four spatial streams is 64-QAM, and modulation schemes used by a second spatial stream, a third spatial stream, and a fourth spatial stream are 16-QAM.

### Example 2: Unequal modulation in the tone dimension:

It may be understood that different tones correspond to different MCSs.

For example, a 996+484-tone RU is allocated to the user A. A modulation scheme used by the 484-tone RU is 64-QAM, and a modulation scheme used by the 996-tone RU is 16-QAM.

It should be understood that, in embodiments of this application, that two MCSs are different (or described as different MCSs) may include the following three cases:
Case 1: The two different MCSs have a same modulation scheme but different code rates.
Case 2: The two different MCSs have different modulation schemes, but a same code rate.
Case 3: The two different MCSs have different modulation schemes, and different code rates.

### 4. Equal MCS

The equal MCS means that a same MCS may be used for resources allocated to a user A in a dimension (for example, a spatial stream dimension or a tone dimension).

For example, a 996-tone RU is allocated to the user A, and the user A uses four spatial streams for transmission on the 996-tone RU. A modulation scheme used by each of the four spatial streams is 64-QAM, or a modulation scheme used by each spatial stream is 16-QAM.

For another example, a 996+484-tone RU is allocated to the user A. Modulation schemes used by the 484-tone RU and the 996-tone RU are 64-QAM, or modulation schemes used by the 484-tone RU and the 996-tone RU are 16-QAM.

In a communication process between two devices, one device needs to notify, in advance, the other device of an MCS capability supported by the device, for example, an unequal MCS supported when information is sent and/or an unequal MCS supported when information is received. However, how to enable one device to flexibly indicate an unequal MCS capability of the device to another device is a problem to be urgently resolved by a person skilled in the art.

In view of this, an embodiment of this application provides a first modulation and coding scheme indication method. The method may be applied to the communication system shown in FIG. 1. Both a first device and a second device in the method may have the components shown in FIG. 2 or FIG. 3.

In the modulation and coding scheme indication method provided in this embodiment of this application, the first device determines an unequal MCS configuration, and then the first device sends indication information 1 to the second device. The indication information 1 indicates the unequal MCS configuration supported by the first device under a specified condition. The specified condition includes at least one of the following:
first, a bandwidth corresponding to the unequal MCS configuration;
second, a size of an RU corresponding to the unequal MCS configuration; or
third, a size of an MRU corresponding to the unequal MCS configuration.

In other words, the indication information 1 can indicate the unequal MCS configuration supported by the first device under the specified condition. The specified condition includes a plurality of cases such as the bandwidth, the size of the RU, or the size of the MRU that correspond to the unequal MCS configuration. Therefore, even if there may be a plurality of cases for the unequal MCS configuration supported by the first device, for example, the unequal MCS configuration supported by the first device in a specific bandwidth, the unequal MCS configuration supported by the first device for an RU of a specific size, or the unequal MCS configuration supported by the first device for an MRU of a specific size, the first device can also flexibly indicate unequal MCS capabilities under different specified conditions based on the indication information 1.

It should be understood that, in the following embodiments of this application, a name of a message between devices or a name or the like of each parameter in the message is merely an example, and may alternatively be another name in a specific implementation. This is not specifically limited in embodiments of this application.

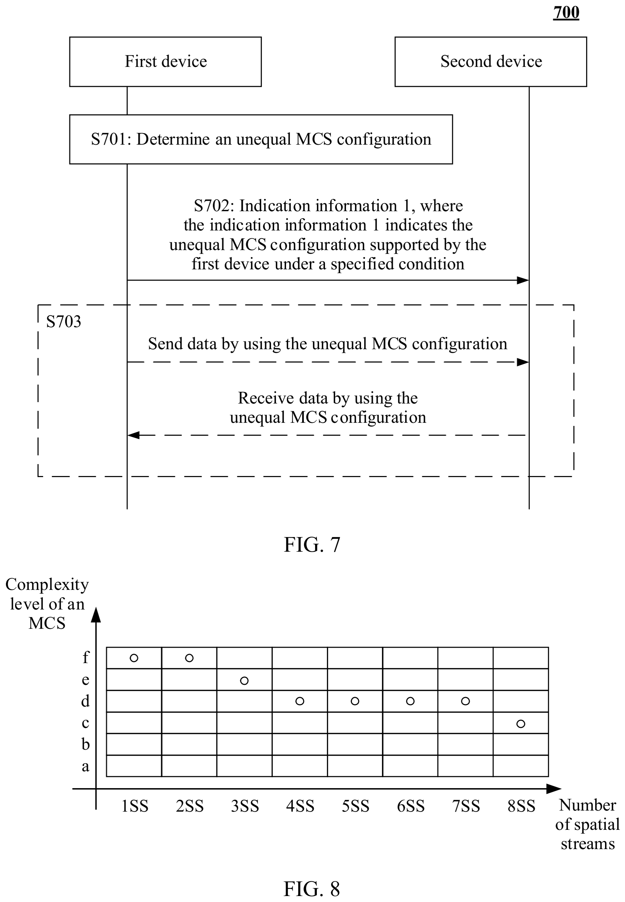

With reference to FIG. 7 to FIG. 14, the following describes in detail the first modulation and coding scheme indication method provided in this embodiment of this application. The modulation and coding scheme indication method 700 provided in this embodiment of this application includes the following steps.

S701: A first device determines an unequal MCS configuration.

For example, the first device is a WLAN device. For example, the first device is the AP or the STA in FIG. 1.

The unequal MCS configuration may be understood as a configuration of unequal MCSs. For the unequal MCS, refer to the noun explanation part. Details are not described herein again.

For example, the unequal MCS configuration includes at least one of the following:
A configuration 1 is included, and is an unequal MCS configuration used by the first device for sending.

For example, four spatial streams are used for sending. It may be understood that a modulation scheme used by a first spatial stream in the four spatial streams is 64-QAM, and modulation schemes used by a second spatial stream, a third spatial stream, and a fourth spatial stream are 16-QAM.

For another example, a 996+484-tone RU is used for sending. A modulation scheme used by the 484-tone RU is 64-QAM, and a modulation scheme used by the 996-tone RU is 16-QAM.

In this way, the first device can indicate, to the second device based on the indication information 1, the unequal MCSs supported by the first device when the first device sends data.

A configuration 2 is included, and is an unequal MCS configuration used by the first device for receiving.

For example, four spatial streams are used for receiving. It may be understood that a modulation scheme used by a first spatial stream in the four spatial streams is 64-QAM, and modulation schemes used by a second spatial stream, a third spatial stream, and a fourth spatial stream are 16-QAM.

For another example, a 996+484-tone RU is used for receiving. A modulation scheme used by the 484-tone RU is 64-QAM, and a modulation scheme used by the 996-tone RU is 16-QAM.

In this way, the first device can indicate, to the second device based on the indication information 1, the unequal MCSs supported by the first device when the first device receives data.

For another example, the unequal MCS configuration includes at least one of the following:
A configuration 3 is included, and includes different MCSs corresponding to the first device in different spatial streams.

Four spatial streams are used as an example. It may be understood that a modulation scheme used by a first spatial stream in the four spatial streams is 64-QAM, and modulation schemes used by a second spatial stream, a third spatial stream, and a fourth spatial stream are 16-QAM.

In this way, the first device can indicate, to the second device based on the indication information 1, different MCSs supported by the first device in different spatial streams.

A configuration 4 is included, and includes different MCSs corresponding to the first device on different tones.

A 996+484-tone RU is used as an example. A modulation scheme used by the 484-tone RU is 64-QAM, and a modulation scheme used by the 996-tone RU is 16-QAM.

In this way, the first device can indicate, to the second device based on the indication information 1, different MCSs supported by the first device on different tones.

It should be understood that, as communication technologies evolve, the dimension corresponding to unequal MCSs may also change. For example, different MCSs are supported in a dimension other than the spatial stream and the tone. This is not limited in embodiments of this application. For another example, the unequal MCS configuration may be understood as an unequal MCS configuration supported by the first device under a specified condition.

The specified condition includes at least one of the following:
A condition 1 is included, and is a bandwidth corresponding to the unequal MCS configuration.

For example, the bandwidth corresponding to the unequal MCS configuration is less than or equal to 80 MHz, and may be denoted as BW≤80 MHz. It may be understood that, in this embodiment of this application, the bandwidth corresponding to the unequal MCS configuration may be a bandwidth range.

For another example, the bandwidth corresponding to the unequal MCS configuration is equal to 160 MHz, and may be denoted as BW=160 MHz. It may be understood that, in this embodiment of this application, the bandwidth corresponding to the unequal MCS configuration may be a value. When the specified condition includes the condition 1, it may be understood that the unequal MCS configuration determined by the first device is an unequal MCS configuration supported by the first device in a specific bandwidth.

A condition 2 is included, and is a size of an RU corresponding to the unequal MCS configuration. A condition 3 is included, and is a size of an MRU corresponding to the unequal MCS configuration.

Example 1: The size of the RU or the size of the MRU corresponding to the unequal MCS configuration is less than or equal to 242-tone. For example, the RU corresponding to the unequal MCS configuration is a 26-tone RU, a 52-tone RU, a 106-tone RU, or a 242-tone RU. Alternatively, the MRU corresponding to the unequal MCS configuration is a 52+26-tone RU including a 52-tone RU and a 26-tone RU, or the MRU corresponding to the unequal MCS configuration is a 106+26-tone RU including a 106-tone RU and a 26-tone RU.

Example 2: The size of the RU or the size of the MRU corresponding to the unequal MCS configuration is less than or equal to 996-tone.

Example 3: The size of the RU or the size of the MRU corresponding to the unequal MCS configuration is less than or equal to 2*996-tone.

Example 4: The size of the RU or the size of the MRU corresponding to the unequal MCS configuration is less than or equal to 484+2*996-tone.

It may be understood that, in this embodiment of this application, the size of the RU or the size of the MRU corresponding to the unequal MCS configuration may be within a specific range, for example, within a tone number range corresponding to one RU, or within a tone number range corresponding to one MRU.

Example 5: The size of the RU corresponding to the unequal MCS configuration is equal to 242-tone.

Example 6: The size of the RU corresponding to the unequal MCS configuration is equal to 996-tone.

Example 7: The size of the RU corresponding to the unequal MCS configuration is equal to 2*996-tone.

Example 8: The size of the MRU corresponding to the unequal MCS configuration is equal to 484+2*996-tone.

It may be understood that, in this embodiment of this application, the size of the RU or the size of the MRU corresponding to the unequal MCS configuration may be a specific value, for example, a value indicating a number of tones.

It should be understood that, in this embodiment of this application, definitions of the following descriptions are the same, and may be replaced with each other: an RU size, and a size of an RU. When the specified condition includes the condition 2, it may be understood that the unequal MCS configuration determined by the first device is an unequal MCS configuration supported by the first device for an RU of a specific size.

Similarly, definitions of the following descriptions are the same, and may be replaced with each other: an MRU size, a size of an MRU, an MRU size, and a size of an MRU. When the specified condition includes the condition 3, it may be understood that the unequal MCS configuration determined by the first device is an unequal MCS configuration supported by the first device for an MRU of a specific size.

It should be understood that, in this embodiment of this application, the specified condition includes at least one of the conditions 1 to 3. For example, the specified condition includes the condition 1, but does not include the condition 2 and the condition 3; or the specified condition includes the condition 2 and the condition 3, but does not include the condition 1. Certainly, the specified condition may further include another combination of the conditions 1 to 3. Details are not described.

For example, an implementation process of S701 includes the following:
The first device determines the unequal MCS configuration based on a number of spatial streams (number of spatial streams, NSSs) used by the first device.

For example, in a sending scenario, a number of spatial streams used by the first device for sending is denoted as NSS₁. The first device determines the unequal MCS configuration based on NSS₁. In this case, the unequal MCS configuration determined by the first device is the unequal MCS configuration used by the first device for sending.

For another example, in a receiving scenario, a number of spatial streams used by the first device for receiving is denoted as NSS₂. The first device determines the unequal MCS configuration based on NSS₂. In this case, the unequal MCS configuration determined by the first device is the unequal MCS configuration used by the first device for receiving.

For the first device, after determining the unequal MCS configuration, the first device performs S702:
S702: The first device sends the indication information 1 to the second device. Correspondingly, the second device receives the indication information 1 from the first device.

For example, the second device is a WLAN device. For example, the second device is the AP or the STA in FIG. 1.

The indication information 1 indicates the unequal MCS configuration supported by the first device under the specified condition.

For the specified condition and the unequal MCS configuration, refer to the descriptions in S701. Details are not described herein again.

The following describes the indication information 1 by using two examples (example 1 and example 2 below).

### Example 1: Notification of the unequal MCS based on the number of spatial streams

In a manner 1 in the example 1, that the indication information 1 indicates the unequal MCS configuration supported by the first device under the specified condition includes: The indication information 1 indicates a first MCS, and the first MCS is an MCS with highest complexity supported by the first device.

It may be understood that the indication information 1 indicates the MCS with the highest complexity supported by the first device, namely, the first MCS. After the first MCS with the highest complexity is determined, complexity of another MCS in the unequal MCS configuration is the same as or lower than the complexity of the first MCS.

With reference to FIG. 8, the spatial stream is used as an example for description.

For example, when the number of spatial streams is 2 (that is, NSS=2, for example, 2SS in FIG. 8), the first device supports an MCS 1 in a spatial stream 1, and supports an MCS 2 in a spatial stream 2. Complexity of the MCS 1 is f (as shown in FIG. 8), and complexity of the MCS 2 is e (not shown in FIG. 8). The complexity of the MCS 1 is higher than the complexity of the MCS 2. Correspondingly, the MCS 1 is the MCS with the highest complexity, and the MCS 1 is the first MCS.

For another example, when the number of spatial streams is 3 (that is, NSS=3, for example, 3SS in FIG. 8), the first device supports an MCS 1 in a spatial stream 1, supports an MCS 2 in a spatial stream 2, and supports an MCS 3 in a spatial stream 3. Complexity of the MCS 1 to the MCS 3 is e (as shown in FIG. 8), that is, the MCS 1 to the MCS 3 have the same complexity. Correspondingly, the first MCS is any one of the MCS 1 to the MCS 3.

For still another example, when the number of spatial streams is 4 (that is, NSS=4, for example, 4SS in FIG. 8), the first device supports an MCS 1 in a spatial stream 1, supports an MCS 2 in a spatial stream 2, supports an MCS 3 in a spatial stream 3, and supports an MCS 4 in a spatial stream 4. Complexity of the MCS 1 and the MCS 2 is d (as shown in FIG. 8), and complexity of the MCS 3 and the MCS 4 is c (not shown in FIG. 8). The complexity of the MCS 1 (or the MCS 2) is higher than the complexity of the MCS 3 (or the MCS 4). Correspondingly, the first MCS is either the MCS 1 or the MCS 2.

In the manner 1 of the example 1, a field format of the indication information 1 is described as follows:
The indication information 1 includes a first field. The first field is related to the specified condition. Details are as follows:

For example, when the specified condition includes the condition 1, the first field indicates the bandwidth corresponding to the unequal MCS configuration.

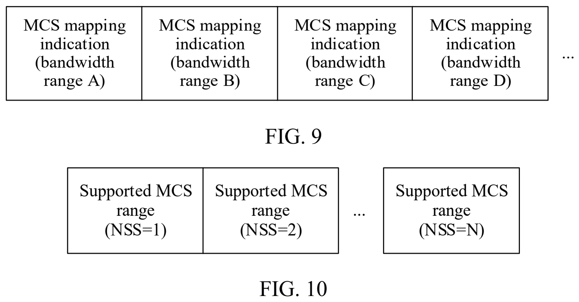

FIG. 9 is used as an example. The first field may be an "MCS mapping indication" field. When the bandwidth corresponding to the unequal MCS configuration is a bandwidth range A, the first field may be the "MCS mapping indication (bandwidth range A)" field in FIG. 9. When the bandwidth corresponding to the unequal MCS configuration is a bandwidth range B, the first field may be the "MCS mapping indication (bandwidth range B)" field in FIG. 9.

It should be understood that the bandwidth range may alternatively be replaced with a bandwidth value. This is not limited in embodiments of this application.

For another example, when the specified condition includes the condition 2, the first field indicates the size of the RU corresponding to the unequal MCS configuration.

For example, the size of the RU corresponding to the unequal MCS configuration includes an RU range 1 and an RU range 2. When the size of the RU corresponding to the unequal MCS configuration is the RU range 1, the first field indicates the RU range 1. When the size of the RU corresponding to the unequal MCS configuration is the RU range 2, the first field indicates the RU range 2.

It should be understood that the RU range may alternatively be replaced with an RU size value. This is not limited in embodiments of this application.

For still another example, when the specified condition includes the condition 3, the first field indicates the size of the MRU corresponding to the unequal MCS configuration.

For example, the size of the MRU corresponding to the unequal MCS configuration includes an MRU range 1 and an MRU range 2. When the size of the MRU corresponding to the unequal MCS configuration is the MRU range 1, the first field indicates the MRU range 1. When the size of the MRU corresponding to the unequal MCS configuration is the MRU range 2, the first field indicates the MRU range 2.

It should be understood that the MRU range may alternatively be replaced with an MRU size value. This is not limited in embodiments of this application.

Further, the first field includes a first subfield, and the first subfield includes a first value. The first value indicates the first MCS.

For example, the first value indicates an index of the first MCS, or the first value indicates an MCS range of the first MCS.

For example, FIG. 10 is used as an example. The first subfield may be a "supported MCS range" field. When the number of spatial streams used by the first device is 1, the first subfield may be the "supported MCS range (NSS=1)" field in FIG. 10. When the number of spatial streams used by the first device is 2, the first subfield may be the "supported MCS range (NSS=2)" field in FIG. 10.

It should be noted that, in FIG. 10, NSS=1 means that the number of spatial streams used by the first device is 1. NSS=2 means that the number of spatial streams used by the first device is 2. NSS=N means that the number of spatial streams used by the first device is N.

For example, the first subfield includes a specific number of bits. The first subfield may indicate any value from 0 to z, that is, the first value is any value from 0 to z. A definition of each value from 0 to z is shown in Table 2.

**Table 2**

| Subfield value | MCS range (MCS range) |
|---|---|
| 0 | MCS range a |
| 1 | MCS range b |
| 2 | MCS range c |
| 3 | MCS range d |
| ... | ... |
| y | MCS range x |
| z | Not supported |

With reference to Table 2, when the MCS range of the first MCS is the MCS range a, the first value indicated by the first field is 0. When the MCS range of the first MCS is the MCS range b, the first value indicated by the first field is 1. When there is no MCS range supported by the first device, the first value indicated by the first field is z, indicating that no MCS range is supported.

In a manner 2 in the example 1, the indication information 1 indicates the first MCS, and further indicates a second MCS. For the first MCS, refer to the descriptions of the manner 1 in the example 1. The first MCS is an MCS used in a first spatial stream. The second MCS is an MCS used in a second spatial stream. In other words, the first MCS and the second MCS correspond to different spatial streams.

It may be understood that an indication granularity of the indication information 1 is finer. Specifically, the indication information 1 indicates the MCS with the highest complexity (namely, the first MCS) supported by the first device, and also indicates an MCS (namely, the second MCS) other than the first MCS in the unequal MCS configuration. Complexity of the second MCS is the same as or lower than the complexity of the first MCS.

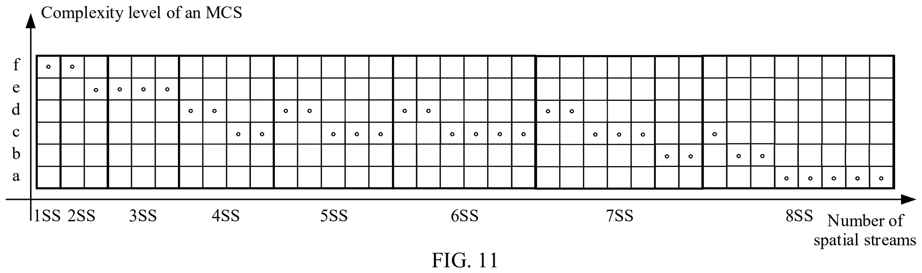

With reference to FIG. 11, the spatial stream is used as an example for description.

For example, when the number of spatial streams is 2 (that is, NSS=2, for example, 2SS in FIG. 11), the first device supports an MCS 1 in a spatial stream 1, and supports an MCS 2 in a spatial stream 2. Complexity of the MCS 1 is f, complexity of the MCS 2 is e, and the complexity of the MCS 1 is higher than the complexity of the MCS 2. Correspondingly, the MCS 1 is the MCS with the highest complexity, the MCS 1 is the first MCS, and the MCS 2 is the second MCS.

For another example, when the number of spatial streams is 3 (that is, NSS=3, for example, 3SS in FIG. 11), the first device supports an MCS 1 in a spatial stream 1, supports an MCS 2 in a spatial stream 2, and supports an MCS 3 in a spatial stream 3. Complexity of the MCS 1 to the MCS 3 is e, that is, the MCS 1 to the MCS 3 have the same complexity. Correspondingly, the first MCS is any one of the MCS 1 to the MCS 3, and the second MCS is any one of the MCS 1 to the MCS 3 other than the first MCS.

For still another example, when the number of spatial streams is 4 (that is, NSS=4, for example, 4SS in FIG. 11), the first device supports an MCS 1 in a spatial stream 1, supports an MCS 2 in a spatial stream 2, supports an MCS 3 in a spatial stream 3, and supports an MCS 4 in a spatial stream 4. Complexity of the MCS 1 and the MCS 2 is d, and complexity of the MCS 3 and the MCS 4 is c. The complexity of the MCS 1 (or the MCS 2) is higher than the complexity of the MCS 3 (or the MCS 4). Correspondingly, the first MCS is either the MCS 1 or the MCS 2, and the second MCS is any one of the MCS 1 to the MCS 4 other than the first MCS.

In the manner 2 of the example 1, a field format of the indication information 1 is described as follows:
The indication information 1 includes a first field. The first field is related to the specified condition. For details, refer to the descriptions of the manner 1 in the example 1. Details are not described herein again.

Further, the first field includes a first subfield, and the first subfield includes a first value and a second value. The first value indicates the first MCS, and the second value indicates the second MCS.

For example, the first value indicates an MCS index of the first MCS, or the first value indicates an MCS range of the first MCS. For details, refer to the descriptions of the manner 1 in the example 1. Details are not described herein again.

For example, the second value indicates an MCS index of the second MCS, or the second value indicates an MCS range of the second MCS. For details, refer to the descriptions of the first value. A difference lies in that the MCSs are different (the first value is related to the first MCS, and the second value is related to the second MCS). Details are not described herein again.

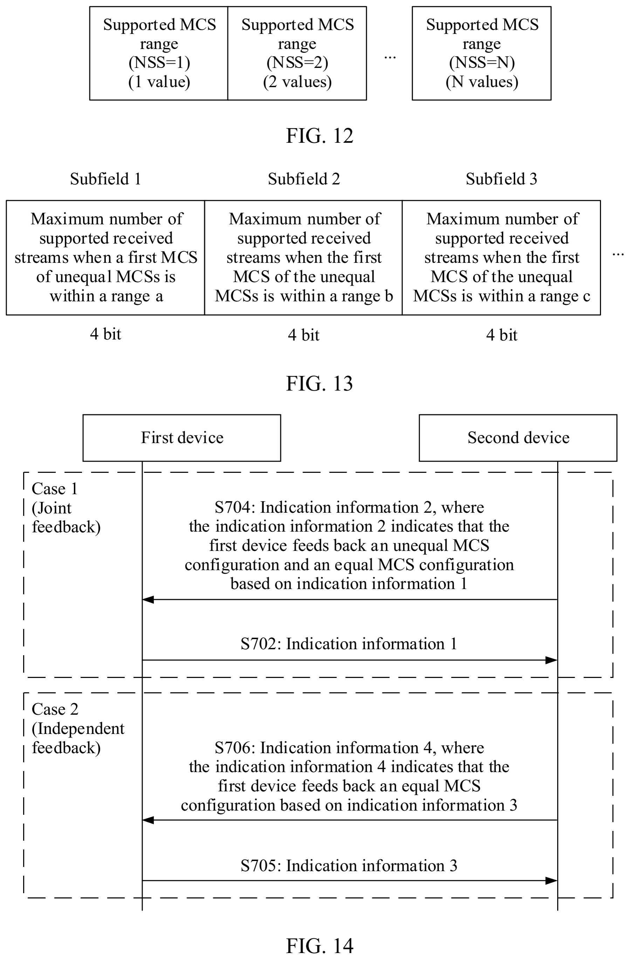

For example, FIG. 12 is used as an example. The first subfield may be a "supported MCS range" field.

When the number of spatial streams used by the first device is 2, the first subfield may be the "supported MCS range (SS=2)" field in FIG. 12. The first subfield includes two values: the first value and the second value. The first value is a configuration parameter of the first stream, and the first value indicates the MCS range of the MCS 1. The second value is a configuration parameter of the second stream, and the second value indicates the MCS range of the MCS 2.

When the number of spatial streams used by the first device is 8, the first subfield may be the "supported MCS range (SS=2)" field in FIG. 12. The first subfield includes at least two values, for example, the first value and the second value. The first value indicates the MCS range of the MCS 1, and the second value indicates the MCS range of the MCS 2.

It should be noted that, similar to FIG. 10, in FIG. 12, SS=1 means that the number of spatial streams used by the first device is 1. SS=2 means that the number of spatial streams used by the first device is 2. SS=N means that the number of spatial streams used by the first device is N.

It should be understood that, when the number of spatial streams is N, the first subfield may include a value, for example, the first value. For details, refer to the descriptions of the manner 1 in the example 1. The first subfield may alternatively include two or more values, for example, the first value and the second value. For details, refer to the descriptions of the manner 2 in the example 1. The first subfield includes a maximum of N values. N is a positive integer, and N is greater than or equal to 2.

Example 2: Notification of the unequal MCS based on a specific MCS set In the example 2, that the indication information 1 indicates the unequal MCS configuration supported by the first device under the specified condition includes: The indication information 1 includes a number of spatial streams and an unequal MCS configuration corresponding to the number of spatial streams.

In the example 2, a field format of the indication information 1 is described as follows:
The indication information 1 includes a first field. The first field is related to the specified condition. For details, refer to the descriptions of the manner 1 in the example 1. Details are not described herein again.

Further, the first field includes a second subfield, and the second subfield includes a third value. The third value indicates the number of spatial streams and the unequal MCS configuration corresponding to the number of spatial streams.

For example, the third value indicates a first MCS and a maximum number of spatial streams supported in the first MCS.

For another example, the third value indicates an MCS range of a first MCS and a maximum number of spatial streams supported within the MCS range. For the first MCS, refer to the descriptions of the example 1. Details are not described herein again.

For example, FIG. 13 is used as an example. The second subfield may be a block in FIG. 13. When the MCS range of the first MCS is an MCS range a, the third value of the second subfield indicates a maximum number of spatial streams supported within the MCS range a.

For example, the second subfield includes a specific number of bits, for example, 4 bits (bit), and may indicate a value from 0 to 15. A definition of each value from 0 to 15 is shown in Table 3.

**Table 3**

| Maximum number of spatial streams subfield value (Max Nss subfield value) | Maximum number of spatial streams supported in a specified MCS set (Maximum number of spatial streams that supports the specified MCS set) |
|---|---|
| 0 | Not supported (Not supported) |
| 1 | 1 |
| 2 | 2 |
| 3 | 3 |
| 4 | 4 |
| 5 | 5 |
| 6 | 6 |
| 7 | 7 |
| 8 | 8 |
| 9 to 15 | Reserved (Reserved) |

In Table 3, the max Nss subfield value is a value of any subfield in FIG. 13. The specified MCS set may be understood as the MCS range of the first MCS.

For example, a value of a subfield 1 in FIG. 13 is 1 (that is, the third value is 1), and with reference to Table 3, the maximum number of spatial streams is 1.

It may be understood that, when the first MCS of the unequal MCSs is within the range a, the maximum number of supported spatial streams is 1 in a data receiving process.

For another example, a value of a subfield 2 in FIG. 13 is 2 (that is, the third value is 2), and with reference to Table 3, the maximum number of spatial streams is 2.

It may be understood that, when the first MCS of the unequal MCSs is within a range b, the maximum number of supported spatial streams is 2 in a data receiving process.

For the first device, after sending the indication information 1, the first device performs S703: S703: The first device sends or receives data by using the unequal MCS configuration.

For example, sending data is used as an example, and S703 includes:
The first device sends data to the second device in different spatial streams by using the unequal MCS configuration. Alternatively, the first device sends data to the second device on different tones by using the unequal MCS configuration.

For another example, receiving data is used as an example, and S703 includes:
The first device receives data from the second device in different spatial streams by using the unequal MCS configuration. Alternatively, the first device receives data from the second device on different tones by using the unequal MCS configuration.

In some embodiments, the first device can further indicate an equal MCS capability of the first device. The following provides descriptions with reference to two cases (case 1 and case 2). Case 1: The unequal MCS capability and the equal MCS capability are jointly indicated, as shown in FIG. 14.

In the case 1, the first MCS is not only the MCS with the highest complexity in the unequal MCS, but also the equal MCS. In this way, the indication information 1 indicates both the unequal MCS capability supported by the first device and the equal MCS capability supported by the first device. In the case 1, before the first device performs S702, S704 is performed:
S704: The second device sends indication information 2 to the first device. Correspondingly, the first device receives the indication information 2 from the second device.

The indication information 2 indicates that the first device feeds back the unequal MCS configuration and the equal MCS configuration based on the indication information 1.

For example, the indication information 2 includes 1 bit. When the bit is 1, it means that the indication information 2 indicates that "the first device needs to feed back the unequal MCS configuration and the equal MCS configuration based on same information (namely, the indication information 1)". Alternatively, when the bit is 0, it means that the indication information 2 indicates that "the first device needs to feed back the unequal MCS configuration and the equal MCS configuration based on same information (namely, the indication information 1)".

In other words, the second device configures the manner in which the first device feeds back the MCS capability, that is, feeds back the unequal MCS configuration and the equal MCS configuration in the same information (namely, the indication information 1).

Case 2: The unequal MCS capability and the equal MCS capability are independently indicated, as shown in FIG. 14.

In the case 2, in addition to S702, the first device further performs S705:
S705: The first device sends indication information 3 to the second device. Correspondingly, the second device receives the indication information 3 from the first device.

The indication information 3 indicates the equal MCS configuration supported by the first device. For example, the indication information 3 includes an MCS index, and the MCS index is an index of an equal MCS.

In other words, the first device indicates, based on the indication information 1, the unequal MCS capability supported by the first device, and indicates, based on the indication information 2, the equal MCS capability supported by the first device. In other words, the first device indicates the unequal MCS configuration and the equal MCS configuration based on different information.

In the case 2, before the first device performs S705, S706 is performed:
S706: The second device sends indication information 4 to the first device. Correspondingly, the first device receives the indication information 4 from the second device.

The indication information 4 indicates that the first device feeds back the equal MCS configuration based on the indication information 3.

Alternatively, the description may be replaced with: The indication information 4 indicates that the first device feeds back the unequal MCS configuration based on the indication information 1, and feeds back the equal MCS configuration based on the indication information 3.

For example, the indication information 4 includes 1 bit. When the bit is 1, it means that the indication information 4 indicates that "the first device feeds back the equal MCS configuration based on the indication information 3". Alternatively, when the bit is 0, it means that the indication information 4 indicates that "the first device feeds back the equal MCS configuration based on the indication information 3".

In other words, the second device configures the manner in which the first device feeds back the MCS capability, that is, feeds back the unequal MCS configuration and the equal MCS configuration in different information (namely, the indication information 1 and the indication information 3).

An embodiment of this application provides a second modulation and coding scheme indication method. The method may be applied to the communication system shown in FIG. 1. Both a first device and a second device in the method may have the components shown in FIG. 2 or FIG. 3.

In the modulation and coding scheme indication method provided in this embodiment of this application, the first device determines an unequal MCS configuration, and then the first device sends indication information to the second device. The indication information indicates an MCS index, and the MCS index is an index of the unequal MCS configuration.

In other words, indication information 5 can indicate the MCS index. The MCS index indicated by the indication information 5 is the index of the unequal MCS. Therefore, even if the first device supports the different MCS configuration, different unequal MCS capabilities can be flexibly indicated to the second device based on the indication information 5.

It should be understood that, in the following embodiments of this application, a name of a message between devices or a name or the like of each parameter in the message is merely an example, and may alternatively be another name in a specific implementation. This is not specifically limited in embodiments of this application.

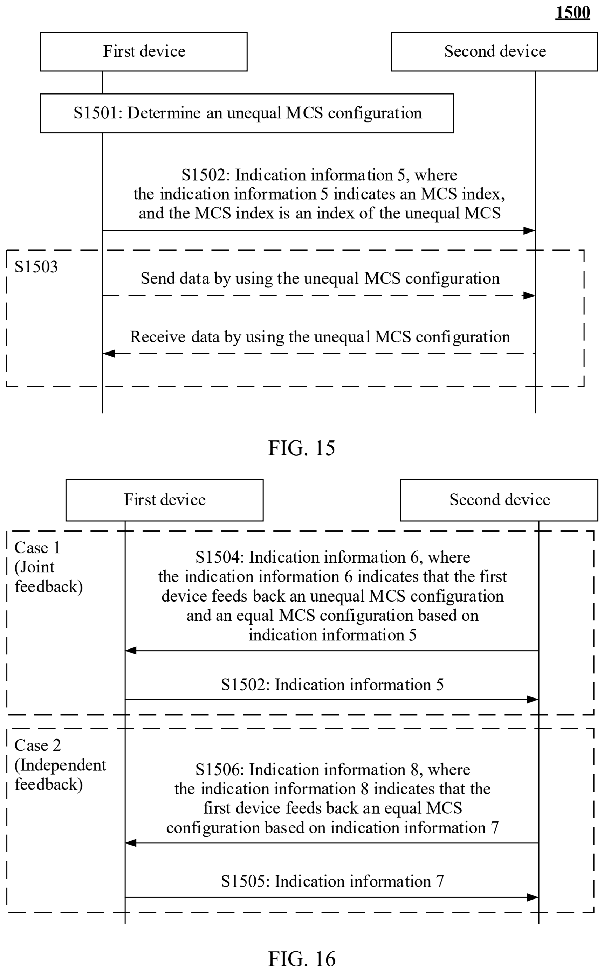

With reference to FIG. 15 and FIG. 16, the following describes in detail the second modulation and coding scheme indication method provided in this embodiment of this application. The modulation and coding scheme indication method 1500 provided in this embodiment of this application includes the following steps.

S1501: A first device determines an unequal MCS configuration.

An implementation process of S1501 does not relate to a specified condition. For other details, refer to the descriptions in S701. Details are not described again.

For the first device, after determining the unequal MCS configuration, the first device performs S1502:
S1502: The first device sends indication information 5 to a second device. Correspondingly, the second device receives the indication information 5 from the first device.

The indication information 5 indicates an MCS index, and the MCS index is an index of the unequal MCS.

The following describes the MCS index by using four examples (example 1 to example 4 below). Example 1: The MCS index indicates an NSS and different MCSs corresponding to different spatial streams in the NSS, as shown in Table 4.

**Table 4**

| MCS index (MCS index) value | Definition (Definition) |
|---|---|
| x | NSS₁=2 |
| | MCS for SS 1=modulation scheme 1 and code rate 1 |
| | MCS for SS 2=modulation scheme 2 and code rate 2 |
| y | NSS₂=3 |
| | MCS for SS 1=modulation scheme 1 and code rate 1 |
| | MCS for SS 2=modulation scheme 2 and code rate 2 |
| | MCS for SS 3=modulation scheme 3 and code rate 3 |

With reference to Table 4, the unequal MCSs supported by the first device are configured as follows: When the number of spatial streams is 2 (that is, NSS₁=2), the modulation scheme 1 and the code rate 1 (that is, MCS for SS 1=modulation scheme 1 and code rate 1) are used by the first spatial stream in the two spatial streams, and the modulation scheme 2 and the code rate 2 (that is, MCS for SS 2=modulation scheme 2 and code rate 2) are used by the second spatial stream, the MCS index indicated by the indication information 5 is x.

The unequal MCSs supported by the first device are configured as follows: When the number of spatial streams is 3 (that is, NSS₂=3), the modulation scheme 1 and the code rate 1 (that is, MCS for SS 1=modulation scheme 1 and code rate 1) are used by the first spatial stream in the three spatial streams, the modulation scheme 2 and the code rate 2 (that is, MCS for SS 2=modulation scheme 2 and code rate 2) are used by the second spatial stream, and the modulation scheme 3 and the code rate 3 (that is, MCS for SS 3=modulation scheme 3 and code rate 3) are used by the third spatial stream, the MCS index indicated by the indication information 5 is y.

Example 2: The MCS index is associated with an NSS, and the MCS index indicates different MCSs corresponding to different spatial streams in the NSS associated with the MCS index.

Details are shown in Table 5.

**Table 5**

| MCS index (MCS index) value | Definition (Definition) | |
|---|---|---|
| | NSS₁=2 | NSS₂=3 |
| z | MCS for SS 1=modulation scheme 1 and code rate 1 | MCS for SS 1=modulation scheme 3 and code rate 3 |
| | MCS for SS 2=modulation scheme 2 and code rate 2 | MCS for SS 2=modulation scheme 4 and code rate 4 |
| | | MCS for SS 3=modulation scheme 5 and code rate 5 |

With reference to Table 5, the unequal MCSs supported by the first device are configured as follows: When the number of spatial streams is 2 (for example, denoted as NSS₁=2), the modulation scheme 1 and the code rate 1 (for example, denoted as MCS for SS 1=modulation scheme 1 and code rate 1) are used by the first spatial stream in the two spatial streams, and the modulation scheme 2 and the code rate 2 (for example, denoted as MCS for SS 2=modulation scheme 2 and code rate 2) are used by the second spatial stream, the MCS index indicated by the indication information 5 is z, and the MCS index is associated with NSS₁ (NSS₁=2).

The unequal MCSs supported by the first device are configured as follows: When the number of spatial streams is 3 (for example, denoted as NSS₂=3), the modulation scheme 1 and the code rate 1 (for example, denoted as MCS for SS 1=modulation scheme 3 and code rate 3) are used by the first spatial stream in the three spatial streams, the modulation scheme 2 and the code rate 2 (for example, denoted as MCS for SS 2=modulation scheme 4 and code rate 4) are used by the second spatial stream, and the modulation scheme 3 and the code rate 3 (for example, denoted as MCS for SS 3=modulation scheme 5 and code rate 5) are used by the third spatial stream, the MCS index indicated by the indication information 5 is z, and the MCS index is associated with NSS₂ (NSS₂=3).

It should be understood that, in Table 4 and Table 5, an example in which NSS₁=2 or NSS₂=3 is used to describe parameter settings in the configured number of streams of the NSS. Certainly, parameter settings in another configured number of streams of the NSS (for example, the NSS is 4 or 8) are also supported. Details are not described one by one.

Example 3: The MCS index indicates a resource configuration and different MCSs corresponding to different tones in the resource configuration. The resource configuration includes an RU or an MRU allocated to the first device, and the RU and the MRU include a plurality of tones. Details are shown in Table 6.

**Table 6**

| MCS index (MCS index) value | Definition (Definition) |
|---|---|
| a | 484+996-tone |
| | MCS for 996-tone RU=modulation scheme 1 and code rate 1 |
| | MCS for 484-tone RU=modulation scheme 2 and code rate 2 |
| b | 996-tone |
| | MCS for 484-tone RU 1=modulation scheme 1 and code rate 1 |
| | MCS for 484-tone RU 2=modulation scheme 2 and code rate 2 |

With reference to Table 6, the unequal MCSs supported by the first device are configured as follows: When a size of the RU or the MRU is 996+484-tone (that is, the MRU=996+484-tone, or the RU=996+484-tone), the modulation scheme 1 and the code rate 1 (that is, MCS for 996-tone RU=modulation scheme 1 and code rate 1) are used by a tone in the 996-tone RU, and the modulation scheme 2 and the code rate 2 (that is, MCS for 484-tone RU=modulation scheme 2 and code rate 2) are used by a tone in the 484-tone RU, the MCS index indicated by the indication information 5 is a.

The unequal MCSs supported by the first device are configured as follows: When a size of the RU or the MRU is the 996-tone RU, the modulation scheme 1 and the code rate 1 (for example, MCS for 484-tone RU 1=modulation scheme 1 and code rate 1) are used by a part of a tone in 996-tone, and the modulation scheme 2 and the code rate 2 (for example, MCS for 484-tone RU 2=modulation scheme 2 and code rate 2) are used by the other part of the tone in 996-tone, the MCS index indicated by the indication information 5 is b.

Example 4: The MCS index is associated with a resource configuration. The resource configuration includes an RU or an MRU allocated to the first device, and the RU and the MRU include a plurality of tones. The MCS index indicates different MCSs corresponding to different tones in the resource configuration. Details are shown in Table 7.

**Table 7**

| MCS index (MCS index) value | Definition (Definition) | |
|---|---|---|
| | 484+996-tone | 996-tone |
| c | MCS for 996-tone RU=modulation scheme 1 and code rate 1 | MCS for 484-tone RU |
| | | 1=modulation scheme 1 and code rate 1 |
| | MCS for 484-tone RU=modulation scheme 2 and code rate 2 | |
| | | MCS for 484-tone RU |
| | | 2=modulation scheme 2 and code rate 2 |

With reference to Table 7, the unequal MCSs supported by the first device are configured as follows: When a size of the RU or the MRU is 996+484-tone (that is, MRU=996+484-tone, or the RU=996+484-tone), the modulation scheme 1 and the code rate 1 (for example, denoted as MCS for 996-tone RU=modulation scheme 1 and code rate 1) are used by a tone in the 996-tone RU, and the modulation scheme 2 and the code rate 2 (for example, denoted as MCS for 484-tone RU=modulation scheme 2 and code rate 2) are used by a tone in the 484-tone RU, the MCS index indicated by the indication information 5 is c, and the MCS index is associated with the resource configuration "484+996-tone".

With reference to Table 7, the unequal MCSs supported by the first device are configured as follows: When a size of the RU or the MRU is 996-tone (that is, the MRU=996-tone, or the RU=996-tone), the modulation scheme 1 and the code rate 1 (for example, denoted as MCS for 484-tone RU 1=modulation scheme 1 and code rate 1) are used by a part of a tone in the 996-tone RU, and the modulation scheme 2 and the code rate 2 (for example, denoted as MCS for 484-tone RU 2=modulation scheme 2 and code rate 2) are used by the other part of the tone in the 996-tone RU, the MCS index indicated by the indication information 5 is c, and the MCS index is associated with the resource configuration "996-tone".

It should be understood that, in Table 6 and Table 7, 484+996-tone or 996-tone is used as an example to describe parameter settings in the resource configuration. Certainly, parameter settings in resource configuration (for example, 2*996+484-tone or 3 *996-tone) are also supported. Details are not described one by one.

The following describes the indication information 5 by using two examples (example 1 to example 3 below).

Example 1: The indication information 5 includes an MCS index value.

For example, the indication information 5 includes at least 1 bit, and the at least 1 bit indicates the MCS index value. The at least 1 bit may be 4 bits, and MCS index values indicated by the 4 bits are in 0 to 15.

For another example, the indication information 5 includes a bitmap, and the bitmap indicates the MCS index value.

Example 2: The indication information 5 includes an MCS range, and the MCS range is a range of the MCS index.

For example, the indication information 5 includes at least 1 bit, and the at least 1 bit indicates an MCS range a. For the value and the MCS range that are indicated by the indication information 5, refer to Table 2. Details are not described again.

Example 3: The indication information 5 indicates a start position and/or an end position of the MCS index.

In a possible design, an example in which a smaller MCS index indicates lower complexity of an MCS corresponding to the MCS index, and the MCS index ranges from 0 to 100 is used for description.

For example, the indication information 5 indicates the start position and the end position of the MCS index. For example, the indication information 5 includes values 0 and 25. The value 0 indicates the start position of the MCS index. The value 25 indicates the end position of the MCS index. Certainly, the start position of the MCS index may alternatively be another value. This is not limited in embodiments of this application.

For another example, the indication information 5 indicates the end position of the MCS index. For example, the indication information 5 includes a value 25. The value 25 indicates the end position of the MCS index. The start position of the MCS index is 0 by default.

In another possible design, an example in which a larger MCS index indicates lower complexity of an MCS corresponding to the MCS index, and the MCS index ranges from 0 to 100 is used for description.

For example, the indication information 5 indicates the start position and the end position of the MCS index. For example, the indication information 5 includes values 100 and 25. The value 25 indicates the start position of the MCS index. The value 100 indicates the end position of the MCS index. Certainly, the end position of the MCS index may alternatively be another value. This is not limited in embodiments of this application.

For another example, the indication information 5 indicates the start position of the MCS index. For example, the indication information 5 includes a value 25. The value 25 indicates the start position of the MCS index. The end position of the MCS index is 100 by default.

It should be understood that, in the example 3, decimal notation is used as an example, and values 0, 25, 100, and the like are used to describe the start position and/or the end position of the MCS index. Certainly, another number system, for example, binary, may also be supported.

That "a smaller MCS index indicates lower complexity of an MCS corresponding to the MCS index" is used as an example.

When the indication information 5 indicates the start position and the end position of the MCS index, the indication information 5 includes 0000 and 1000. "0000" is binary, and indicates the start position of the MCS index, that is, the MCS index is 0. "1000" is binary, and indicates the end position of the MCS index, that is, the MCS index is 8.

When the indication information 5 indicates the end position of the MCS index, the indication information 5 includes 1000. "1000" is binary, and indicates the end position of the MCS index, that is, the MCS index is 8. The start position of the MCS index is 0000 by default, that is, the MCS index is 0.

Certainly, binary notation is also applicable to the case in which "a larger MCS index indicates lower complexity of an MCS corresponding to the MCS index". Details are not described one by one.

For the first device, after sending the indication information 5, the first device performs S1503: S1503: The first device sends or receives data by using the unequal MCS configuration.

For an implementation process of S1503, refer to the descriptions in S703. Details are not described herein again.

In some embodiments, the first device can further indicate an equal MCS capability of the first device. The following provides descriptions with reference to two cases (case 1 and case 2). Case 1: The unequal MCS capability and the equal MCS capability are jointly indicated, as shown in FIG. 16.

In the case 1, the MCS index is both an index of the unequal MCS and an index of an equal MCS. In this way, the indication information 5 indicates both the unequal MCS capability supported by the first device and the equal MCS capability supported by the first device.

In the case 1, before the first device performs S1502, S1504 is performed:
S1504: The second device sends indication information 6 to the first device. Correspondingly, the first device receives the indication information 6 from the second device.

The indication information 6 indicates that the first device feeds back the unequal MCS configuration and the equal MCS configuration based on the indication information 5.

For an implementation process of S1504, refer to the descriptions in S704. Details are not described herein again.

Case 2: The unequal MCS capability and the equal MCS capability are independently indicated, as shown in FIG. 16.

In the case 2, in addition to S1502, the first device further performs S1505:
S1505: The first device sends indication information 7 to the second device. Correspondingly, the second device receives the indication information 7 from the first device.

The indication information 7 indicates the equal MCS configuration supported by the first device. For an implementation process of S1505, refer to the descriptions in S705. Details are not described herein again.

In the case 2, before the first device performs S1505, S1506 is performed:
S1506: The second device sends indication information 8 to the first device. Correspondingly, the first device receives the indication information 8 from the second device.

The indication information 8 indicates that the first device feeds back the equal MCS configuration based on the indication information 7.

Alternatively, the description may be replaced with: The indication information 8 indicates that the first device feeds back the unequal MCS configuration based on the indication information 5, and feeds back the equal MCS configuration based on the indication information 7.

For an implementation process of S1506, refer to the descriptions in S706. Details are not described herein again.

It should be understood that, in embodiments of this application, the bandwidth like 80 MHz or 160 MHz is merely used as an example for description, and should not be construed as a limitation on this application. The bandwidth may alternatively be another value, for example, 320 MHz. Similarly, for the NSS, that the NSS=2 or NSS=8 is merely used as an example for description, and should not be construed as a limitation on this application. The NSS may alternatively be another value, for example, 16.

The methods provided in embodiments of this application are described above in detail with reference to FIG. 7 to FIG. 16.

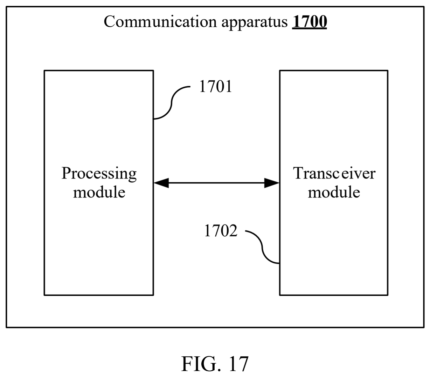

Communication apparatuses configured to perform the methods provided in embodiments of this application are described below in detail with reference to FIG. 17.

For example, FIG. 17 is a diagram 1 of a structure of a communication apparatus according to an embodiment of this application.

As shown in FIG. 17, the communication apparatus 1700 includes a processing module 1701 and a transceiver module 1702. For ease of description, FIG. 17 shows only main components of the communication apparatus 1700.

For example, the communication apparatus 1700 may be applied to the communication system shown in FIG. 1, and performs a function of the first device in the method shown in FIG. 7.

The processing module 1701 is configured to determine an unequal modulation and coding scheme MCS configuration.

The transceiver module 1702 is configured to send indication information to a second device, where the indication information indicates the unequal MCS configuration supported by the first device under a specified condition, and the specified condition includes at least one of the following:
a bandwidth corresponding to the unequal MCS configuration;
a size of a resource unit RU corresponding to the unequal MCS configuration; or
a size of a multiple resource unit MRU corresponding to the unequal MCS configuration.

In a possible design, that the processing module 1701 is configured to determine the unequal MCS configuration includes: determining the unequal MCS configuration based on a number of spatial streams NSS used by the first device.

In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device in different spatial streams; or different MCSs corresponding to the first device on different tones.

In a possible design, that the indication information indicates the unequal MCS configuration supported by the first device under the specified condition includes: The indication information indicates a first MCS, and the first MCS is an MCS with highest complexity supported by the first device.

In a possible design, the first MCS is an MCS used in a first spatial stream. The indication information further indicates a second MCS, and the second MCS is an MCS used in a second spatial stream.

In a possible design, that the indication information indicates the unequal MCS configuration supported by the first device under the specified condition includes: The indication information includes a number of spatial streams NSS and an unequal MCS configuration corresponding to the

NSS.

In a possible design, the transceiver module 1702 is further configured to: after sending the indication information to the second device, send or receive data in different spatial streams by using the unequal MCS configuration; or send or receive data on different tones by using the unequal MCS configuration.

For another example, the communication apparatus 1700 may be applied to the communication system shown in FIG. 1, and performs a function of the first device in the method shown in FIG. 15.

The processing module 1701 is configured to determine an unequal modulation and coding scheme MCS configuration.

The transceiver module 1702 is configured to send indication information to a second device, where the indication information indicates an MCS index, and the MCS index is an index of the unequal MCS configuration.

In a possible design, that the processing module 1701 is configured to determine the unequal MCS configuration includes: determining the unequal MCS configuration based on a number of spatial streams NSS used by the first device.

In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device on different tones.

In a possible design, the MCS index is associated with a resource configuration, the resource configuration includes a resource unit RU or a multiple resource unit MRU allocated to the first device, and the RU and the MRU include a plurality of tones. The MCS index indicates different MCSs corresponding to different tones in the resource configuration.

In a possible design, the MCS index indicates a resource configuration and different MCSs corresponding to different tones in the resource configuration. The resource configuration includes a resource unit RU or a multiple resource unit MRU allocated to the first device, and the RU and the MRU include a plurality of tones.

In a possible design, the unequal MCS configuration includes different MCSs corresponding to the first device in different spatial streams.

In a possible design, the MCS index is associated with a number of spatial streams NSS, and the MCS index indicates different MCSs corresponding to different spatial streams in the NSS.

In a possible design, the MCS index indicates an NSS and different MCSs corresponding to different spatial streams in the NSS.

In a possible design, that the indication information indicates the MCS index includes: The indication information includes a bitmap, and the bitmap indicates the MCS index.

In a possible design, that the indication information indicates the MCS index includes: The indication information includes an MCS index value, and the MCS index value indicates the MCS index.

In a possible design, that the indication information indicates the MCS index includes: The indication information indicates a start position and/or an end position of the MCS index.

In a possible design, the transceiver module 1702 is further configured to: after sending the indication information to the second device, send or receive data in different spatial streams by using the unequal MCS configuration; or send or receive data on different tones by using the unequal MCS configuration.

Optionally, the transceiver module 1702 may include a receiving module and a sending module (not shown in FIG. 17). The transceiver module 1702 is configured to implement a sending function and a receiving function of the communication apparatus 1700.

Optionally, the communication apparatus 1700 may further include a storage module (not shown in FIG. 17), and the storage module stores a program or instructions. When the processing module 1701 executes the program or the instructions, the communication apparatus 1700 is enabled to perform the function of the first device in the method shown in FIG. 7, or the function of the first device in the method shown in FIG. 15.

It may be understood that the communication apparatus 1700 may be a first device, may be a chip (system) or another part or component that may be disposed in the first device, or may be an apparatus including the first device. This is not limited in this application.

In addition, for technical effect of the communication apparatus 1700, refer to the technical effect of the method shown in FIG. 7 or FIG. 15. Details are not described herein again.

For another example, the communication apparatus 1700 may be applied to the communication system shown in FIG. 1, and performs a function of the second device in the method shown in FIG. 7.

The transceiver module 1702 is configured to receive indication information from a first device, where the indication information indicates an unequal MCS configuration supported by the first device under a specified condition, and the specified condition includes at least one of the following:
a bandwidth corresponding to the unequal MCS configuration;
a size of a resource unit RU corresponding to the unequal MCS configuration; or
a size of a multiple resource unit MRU corresponding to the unequal MCS configuration.

The processing module 1701 is configured to determine the unequal MCS configuration based on the indication information.

In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device in different spatial streams; or different MCSs corresponding to the first device on different tones.

In a possible design, that the indication information indicates the unequal MCS configuration supported by the first device under the specified condition includes: The indication information indicates a first MCS, and the first MCS is an MCS with highest complexity supported by the first device.

In a possible design, the first MCS is an MCS used in a first spatial stream. The indication information further indicates a second MCS, and the second MCS is an MCS used in a second spatial stream.

In a possible design, that the indication information indicates the unequal MCS configuration supported by the first device under the specified condition includes: The indication information includes a number of spatial streams NSS and an unequal MCS configuration corresponding to the NSS.

For another example, the communication apparatus 1700 may be applied to the communication system shown in FIG. 1, and performs a function of the second device in the method shown in FIG. 15.

The transceiver module 1702 is configured to receive indication information from a first device, where the indication information indicates a modulation and coding scheme MCS index, and the MCS index is an index of an unequal MCS configuration.

The processing module 1701 is configured to determine the unequal MCS configuration based on the MCS index.

In a possible design, the unequal MCS configuration includes an unequal MCS configuration used by the first device for sending; and/or an unequal MCS configuration used by the first device for receiving.

In a possible design, the unequal MCS configuration includes different MCSs corresponding to the first device on different tones.

In a possible design, the MCS index is associated with a resource configuration, the resource configuration includes a resource unit RU or a multiple resource unit MRU allocated to the first device, and the RU and the MRU include a plurality of tones. The MCS index indicates different MCSs corresponding to different tones in the resource configuration.

In a possible design, the MCS index indicates a resource configuration and different MCSs corresponding to different tones in the resource configuration. The resource configuration includes a resource unit RU or a multiple resource unit MRU allocated to the first device, and the RU and the MRU include a plurality of tones.

In a possible design, the unequal MCS configuration includes different MCSs corresponding to the first device in different spatial streams.

In a possible design, the MCS index is associated with a number of spatial streams NSS, and the MCS index indicates different MCSs corresponding to different spatial streams in the NSS.

In a possible design, the MCS index indicates an NSS and different MCSs corresponding to different spatial streams in the NSS.

In a possible design, that the indication information indicates the MCS index includes: The indication information includes a bitmap, and the bitmap indicates the MCS index.

In a possible design, that the indication information indicates the MCS index includes: The indication information includes an MCS index value, and the MCS index value indicates the MCS index.

In a possible design, that the indication information indicates the MCS index includes: The indication information indicates a start position and/or an end position of the MCS index. Optionally, the transceiver module 1702 may include a receiving module and a sending module (not shown in FIG. 17). The transceiver module 1702 is configured to implement a sending function and a receiving function of the communication apparatus 1700.

Optionally, the communication apparatus 1700 may further include a storage module (not shown in FIG. 17), and the storage module stores a program or instructions. When the processing module 1701 executes the program or the instructions, the communication apparatus 1700 is enabled to perform the function of the second device in the method shown in FIG. 7, or the function of the second device in the method shown in FIG. 15.

It may be understood that the communication apparatus 1700 may be a second device, may be a chip (system) or another part or component that may be disposed in the second device, or may be an apparatus including the second device. This is not limited in this application.

In addition, for technical effect of the communication apparatus 1700, refer to the technical effect of the method shown in FIG. 7 or FIG. 15. Details are not described herein again.

In this embodiment of this application, the communication apparatus 1700 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the communication apparatus 1700 may be in a form shown in FIG. 3.

For example, the processor 301 in FIG. 3 may invoke computer-executable instructions stored in the memory 304, to enable the communication apparatus 300 to perform the methods in the foregoing method embodiments.

Specifically, functions/implementation processes of the processing module 1701 and the transceiver module 1702 in FIG. 17 may be implemented by the processor 301, in the communication apparatus 300 shown in FIG. 3, by invoking the computer-executable instructions stored in the memory 304. Alternatively, functions/implementation processes of the processing module 1701 in FIG. 17 may be implemented by the processor 301, in the communication apparatus 300 shown in FIG. 3, by invoking the computer-executable instructions stored in the memory 304, and functions/implementation processes of the transceiver module 1702 in FIG. 17 may be implemented via the transceiver 302 in the communication apparatus 300 shown in FIG. 3.

It should be understood that one or more of the modules or units may be implemented by software, hardware, or a combination thereof. When any one of the modules or units is implemented by software, the software exists in a form of computer program instructions, and is stored in a memory, and a processor may be configured to execute the program instructions and implement the foregoing method procedures. The processor may be disposed in a SoC (system-on-a-chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a special logic operation.

When the modules or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may perform the foregoing method procedures by running necessary software or without relying on software.

In a possible implementation, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the memory may not be in the communication apparatus. When the communication apparatus is a chip system, the communication apparatus may include a chip, or may include a chip and another discrete component. This is not specifically limited in this embodiment of this application.

In a possible implementation, an embodiment of this application further provides a computer-readable storage medium. The computer-readable storage medium stores a computer program or instructions. When the computer program or instructions are run on a communication apparatus, the communication apparatus is enabled to perform the method in any one of the foregoing method embodiments or any one of the implementations of the foregoing method embodiments.

In a possible implementation, an embodiment of this application further provides a modulation and coding scheme indication method. The modulation and coding scheme indication method includes the method in any one of the foregoing method embodiments or any one of the implementations of the foregoing method embodiments.

In a possible implementation, an embodiment of this application further provides a communication system. The communication system includes the first device in the foregoing method embodiments and the second device in the foregoing method embodiments.

All or some of the foregoing embodiments may be implemented by software, hardware, firmware, or any combination thereof. When a software program is used to implement embodiments, all or some embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described herein with reference to embodiments, in a process of implementing this application that claims protection, a person skilled in the art can understand and implement other variations of the disclosed embodiments by viewing the accompanying drawings, the disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to this application without departing from the scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of the following claims and their equivalent technologies.

## Claims

1. A modulation and coding scheme indication method, applied to a first device, wherein the method comprises:
determining an unequal modulation and coding scheme MCS configuration; and
sending indication information to a second device, wherein the indication information indicates the unequal MCS configuration supported by the first device under a specified condition, and the specified condition comprises at least one of the following:
a bandwidth corresponding to the unequal MCS configuration;
a size of a resource unit RU corresponding to the unequal MCS configuration; or
a size of a multiple resource unit MRU corresponding to the unequal MCS configuration.

2. The method according to claim 1, wherein
the determining the unequal MCS configuration comprises:
determining the unequal MCS configuration based on a number of spatial streams NSS used by the first device.

3. The method according to claim 1 or 2, wherein
the unequal MCS configuration comprises:
an unequal MCS configuration used by the first device for sending; and/or
an unequal MCS configuration used by the first device for receiving.

4. The method according to any one of claims 1 to 3, wherein
the unequal MCS configuration comprises:
different MCSs corresponding to the first device in different spatial streams; or
different MCSs corresponding to the first device on different tones.

5. The method according to any one of claims 1 to 4, wherein
that the indication information indicates the unequal MCS configuration supported by the first device under the specified condition comprises:
the indication information indicates a first MCS, and the first MCS is an MCS with highest complexity supported by the first device.

6. The method according to claim 5, wherein the first MCS is an MCS used in a first spatial stream; and
the indication information further indicates a second MCS, and the second MCS is an MCS used in a second spatial stream.

7. The method according to any one of claims 1 to 4, wherein
that the indication information indicates the unequal MCS configuration supported by the first device under the specified condition comprises:
the indication information comprises a number of spatial streams NSS and an unequal MCS configuration corresponding to the NSS.

8. The method according to any one of claims 1 to 7, wherein after sending the indication information to the second device, the method further comprises:
sending or receiving data in different spatial streams by using the unequal MCS configuration; or
sending or receiving data on different tones by using the unequal MCS configuration.

9. A modulation and coding scheme indication method, applied to a first device, wherein the method comprises:
determining an unequal modulation and coding scheme MCS configuration; and
sending indication information to a second device, wherein the indication information indicates an MCS index, and the MCS index is an index of the unequal MCS configuration.

10. The method according to claim 9, wherein
the determining the unequal MCS configuration comprises:
determining the unequal MCS configuration based on a number of spatial streams NSS used by the first device.

11. The method according to claim 9 or 10, wherein
the unequal MCS configuration comprises:
an unequal MCS configuration used by the first device for sending; and/or
an unequal MCS configuration used by the first device for receiving.

12. The method according to any one of claims 9 to 11, wherein
the unequal MCS configuration comprises:
different MCSs corresponding to the first device on different tones.

13. The method according to any one of claims 9 to 12, wherein
the MCS index is associated with a resource configuration, the resource configuration comprises a resource unit RU or a multiple resource unit MRU allocated to the first device, and the RU and the MRU comprise a plurality of tones; and
the MCS index indicates different MCSs corresponding to different tones in the resource configuration.

14. The method according to any one of claims 9 to 12, wherein
the MCS index indicates a resource configuration and different MCSs corresponding to different tones in the resource configuration; and
the resource configuration comprises a resource unit RU or a multiple resource unit MRU allocated to the first device, and the RU and the MRU comprise a plurality of tones.

15. The method according to any one of claims 9 to 11, wherein
the unequal MCS configuration comprises:
different MCSs corresponding to the first device in different spatial streams.

16. The method according to any one of claims 9 to 11 and 15, wherein
the MCS index is associated with a number of spatial streams NSS, and the MCS index indicates different MCSs corresponding to different spatial streams in the NSS.

17. The method according to any one of claims 9 to 11 and 15, wherein
the MCS index indicates an NSS and different MCSs corresponding to different spatial streams in the NSS.

18. The method according to any one of claims 9 to 17, wherein
that the indication information indicates the MCS index comprises:
the indication information comprises a bitmap, and the bitmap indicates the MCS index; and
the indication information comprises an MCS index value, and the MCS index value indicates the MCS index; or
the indication information indicates a start position and/or an end position of the MCS index.

19. The method according to any one of claims 9 to 18, wherein after sending the indication information to the second device, the method further comprises:
sending or receiving data in different spatial streams by using the unequal MCS configuration; or
sending or receiving data on different tones by using the unequal MCS configuration.

20. A modulation and coding scheme indication method, applied to a second device, wherein the method comprises:
receiving indication information from a first device, wherein the indication information indicates an unequal modulation and coding scheme MCS configuration supported by the first device under a specified condition, and the specified condition comprises at least one of the following:
a bandwidth corresponding to the unequal MCS configuration;
a size of a resource unit RU corresponding to the unequal MCS configuration; or
a size of a multiple resource unit MRU corresponding to the unequal MCS configuration; and
determining the unequal MCS configuration based on the indication information.

21. A modulation and coding scheme indication method, applied to a second device, wherein the method comprises:
receiving indication information from a first device, wherein the indication information indicates a modulation and coding scheme MCS index, and the MCS index is an index of an unequal MCS configuration; and
determining the unequal MCS configuration based on the MCS index.

22. A communication apparatus, comprising a processor and a memory, wherein the processor is coupled to the memory, the memory stores program instructions, and when the program instructions stored in the memory are executed by the processor, the communication apparatus is enabled to perform the method according to any one of claims 1 to 8, or the communication apparatus is enabled to perform the method according to any one of claims 9 to 19.

23. A communication apparatus, comprising a processor and a memory, wherein the processor is coupled to the memory, the memory stores program instructions, and when the program instructions stored in the memory are executed by the processor, the communication apparatus is enabled to perform the method according to claim 20, or the communication apparatus is enabled to perform the method according to claim 21.

24. A chip, comprising a processor and a memory coupled to the processor, wherein the memory stores a computer program, the chip is located in a communication apparatus, and when the processor executes the computer program, the communication apparatus is enabled to perform the method according to any one of claims 1 to 8, or the communication apparatus is enabled to perform the method according to any one of claims 9 to 19.

25. A chip, comprising a processor and a memory coupled to the processor, wherein the memory stores a computer program, the chip is located in a communication apparatus, and when the processor executes the computer program, the communication apparatus is enabled to perform the method according to claim 20, or the communication apparatus is enabled to perform the method according to claim 21.

26. A computer-readable storage medium, storing a computer program or instructions, wherein when the computer program or the instructions are executed on a communication apparatus, the communication apparatus is enabled to perform the method according to any one of claims 1 to 8, or the communication apparatus is enabled to perform the method according to any one of claims 9 to 19.

27. A computer-readable storage medium, storing a computer program or instructions, wherein when the computer program or the instructions are executed on a communication apparatus, the communication apparatus is enabled to perform the method according to claim 20, or the communication apparatus is enabled to perform the method according to claim 21.
